# EUROPEAN PATENT SPECIFICATION

(11) **EP 4 274 456 B1**
(45) Date of publication and mention of the grant of the patent: **01.04.2026**
(21) Application number: 22736505.3
(22) Date of filing: 04.01.2022
(51) Int. Cl.: A47L 5/24, A47L 9/00, A47L 9/28, A47L 9/32, A47L 9/10, H05F 3/02

(54) **HANDHELD VACUUM CLEANER AND VACUUM CLEANER BRUSH ASSEMBLY**
HANDSTAUBSAUGER UND STAUBSAUGERBÜRSTENANORDNUNG
ASPIRATEUR PORTATIF ET ENSEMBLE DE BROSSE D'ASPIRATEUR

(30) Priority: 06.01.2021 CN 202120018567 U; 06.01.2021 CN 202120018598 U; 07.05.2021 CN 202120953560 U; 07.05.2021 CN 202120953529 U; 07.05.2021 CN 202120969999 U; 07.05.2021 CN 202120970000 U; 07.05.2021 CN 202120969997 U; 07.05.2021 CN 202120969965 U; 07.05.2021 CN 202110493081; 07.05.2021 CN 202120969977 U; 07.05.2021 CN 202120969998 U; 29.10.2021 CN 202111271485
(43) Date of publication of application: 15.11.2023
(73) Proprietor: Globe (Jiangsu) Co., Ltd., Changzhou, Jiangsu 213023 (CN)
(72) Inventor: WANG, Doushi, Jiangsu 213023 (CN); GE, Xingjun, Jiangsu 213023 (CN); LU, Baodong, Jiangsu 213023 (CN)
(74) Representative: Bergenstråhle & Partners AB
(86) International application number: PCT/CN2022/070101
(87) International publication number: WO 2022/148343

(56) References cited:
- CN-A- 109 044 191
- CN-A- 109 044 191
- CN-A- 109 561 802
- CN-A- 110 477 800
- CN-A- 111 184 468
- CN-A- 113 180 536
- CN-U- 208 625 563
- CN-U- 208 892 423
- CN-U- 211 066 392
- CN-U- 212 729 653
- CN-U- 212 939 556
- JP-U- 3 222 248

## Description

### TECHNICAL FIELD

The disclosure relates to a technical field of vacuum cleaner, specifically relates to a handheld vacuum cleaner.

### BACKGROUND

Conventionally, various types of cleaning devices have been widely used in daily life. Common cleaning devices on the market, such as handheld vacuum cleaners, are becoming more and more familiar to consumers, and are popular with users due to their lightness, portability, and no need for a power cord during use.

Handheld vacuum cleaners generally use cyclone separation bins as a main separation unit to separate and screen out debris and dust particles in dirty air. Airflow generating devices such as electric fans are used to provide negative pressure as a power unit to drive air to flow. And then it is supplemented by auxiliary units such as dirty air inlet tube, motor front filter unit, energy supply unit, motor rear filter unit, connection structure to connect or communicate with each unit, and handle to provide a holding structure.

CN 109044191 discloses an electric tool that comprises a machine body and an electrostatic transmission conductor, wherein at least one electrostatic gathering part is formed on the machine body, wherein the machine body comprises a shell, and part of the shell forms a handle for holding. The electrostatic transmission conductor comprises an electrostatic discharge part and an electrostatic collecting part The electrostatic discharge part is assembled outside the shell and forms part of the outer surface of the handle. The electrostatic collecting part extends from the electrostatic discharge part to the distance which can lead the electrostatic free flow to the at least one electrostatic gathering part. CN 110477800 discloses a hand-held dust collector and a hand-held vertical integrated dust collector, wherein the hand-held dust collector comprises a machine frame, a dust cylinder and a locking part. The dust cylinder and the locking part are installed on the machine frame. The front end of the dust cylinder and the locking part can relatively move and opposite. A turnover front cover is at the front side of the dust cylinder; and, when the locking part and the dust cylinder relatively move, the front cover can be automatically turned and opened or limited by the locking part so as to cover the front side of the dust cylinder.

### SUMMARY

The disclosure provides a handheld vacuum cleaner to improve technical problems of damage to the whole circuit and electric shock to a user caused by an accumulation of static electricity generated during a use of handheld vacuum cleaner in the conventional art.

The disclosure provides a handheld vacuum cleaner. The handheld vacuum cleaner includes a housing, a suction generating unit, a dirt collection unit and a battery pack. The housing includes a body, a holding portion and a base. The holding portion is arranged between the body and the base. The body includes an accommodating groove, and an air inlet channel. The suction generating unit is at least partially housed in the accommodating groove and configured to generate airflow along the air inlet channel. The dirt collection unit is at least partially housed in the accommodating groove, detachably mounted on the suction generating unit and configured to separate dirt and dust from the airflow. The battery pack is mounted on the base and configured to supply power to the suction generating unit. The holding portion is at least partially covered with astatic conducting portion, and the static conducting portion is electrically connected with a static generating portion of the handheld vacuum cleaner and the holding portion includes a handle and a supporting bracket , and a buckle portion is defined by the handle, the supporting bracket, the body and the base collectively, the static conducting portion is S-shaped as a whole and includes a first covering portion covering a part of a surface of the handle and a second covering portion covering a side of the buckle portion close to the body, the first covering portion and the second covering portion are connected with each other. In one embodiment of the handheld vacuum cleaner, the static conducting portion is a conductive non-metallic material with a resistivity from 10⁷Ω to 10¹²Ω.

In one embodiment of the handheld vacuum cleaner, an end of the first covering portion close to the base is located on a side of the handle far away from the supporting bracket, and an end of the first covering portion close to the body is located on a side of the handle close to the supporting bracket.

In one embodiment of the handheld vacuum cleaner, the air inlet channel is arranged on the body, and the dirt collection unit includes a dirt cup and a first dirt suction inlet located on a side wall of the dirt cup. The first dirt suction inlet matches an air outlet of the air inlet channel. The handheld vacuum cleaner further includes a brush assembly and an air tube unit. The brush assembly is provided with a second dirt suction inlet. The air tube unit includes an air tube, wherein, the second dirt suction inlet of the brush assembly communicates with an air inlet of the air inlet channel of the housing through the air tube. An opening area of the first dirt suction inlet is smaller than a cross-sectional area of an inner hole of the air tube, and an opening area of the second dirt suction inlet is smaller than the cross-sectional area of the inner hole of the air tube. This can improve an efficiency of the handheld vacuum cleaner through position arrangements of the first dirt suction inlet of the dirt cup and the second dirt suction inlet of the brush assembly, and a ratio of the opening area of the first dirt suction inlet of the dirt cup and the second dirt suction inlet of the brush assembly to the cross-sectional area of the inner hole of the air tube, which can solve the technical problem of low dirt collection efficiency of the handheld vacuum cleaner.

In one embodiment of the handheld vacuum cleaner of the disclosure, a ratio of the opening area of the second dirt suction inlet to the cross-sectional area of the inner hole of the air tube is from 0.5 to 0.6.

In one embodiment of the handheld vacuum cleaner of the disclosure, a ratio of the opening area of the first dirt suction inlet to the cross-sectional area of the inner hole of the air tube is from 0.65 to 0.8.

In one embodiment of the handheld vacuum cleaner, the dirt collection unit includes a dirt cup and a filter assembly, the suction generating unit includes a first motor and an air outlet portion, wherein, the dirt collection unit and the suction generating unit are located above the housing, and the dirt collection unit is connected with an end of the suction generating unit provided with the air outlet portion. With such a structure arrangement, the handheld vacuum cleaner has low noise, small size, and convenient assembly and disassembly.

In one embodiment of the handheld vacuum cleaner of the disclosure, the filter assembly includes a first filter assembly and a second filter assembly, wherein first filter assembly is arranged inside the dirt cup, and the second filter assembly is arranged at one end of the dirt cup and is connected with the suction generating unit.

In one embodiment of the handheld vacuum cleaner, the housing is provided with a locking assembly, the suction generating unit is pivotally mounted on the housing, the dirt collection unit includes a dirt cup and a cup cover matched with the dirt cup, wherein, the suction generating unit or the dirt collection unit is provided with a first lock matched with the locking assembly, when the locking assembly is combined with the first lock, the cup cover is closed, when the locking assembly is separated from the first lock, the cup cover is opened. Such a structural may realize one-key dirt dumping, thereby facilitating users to clean up dirt.

In one embodiment of the handheld vacuum cleaner, the housing is provided with an accommodating groove to house the suction generating unit and the dirt collection unit, the locking assembly is located inside the accommodating groove and opposite to the dirt collection unit, and the first lock is arranged on the dirt collection unit.

In one embodiment of the handheld vacuum cleaner, the locking assembly includes a second lock matched with the first lock, a second elastic component matched with the second lock, and an unlocking button mounted on the second lock, when the unlocking button is pressed, the second lock is displaced so that the first lock and the second lock are out of matching, and the second elastic component is elastically deformed at this time.

In one embodiment of the handheld vacuum cleaner, the locking assembly further includes a third elastic component, one end of the second elastic component abuts against the housing, the other end of the second elastic component abuts against the second lock, one end of the third elastic component abuts against the second lock, and the other end of the third elastic component abuts against the unlocking button.

In one embodiment of the handheld vacuum cleaner, the housing is provided with a first limiting portion, and the suction generating unit or the dirt collection unit is provided with a second limiting portion matched with the first limiting portion to limit a rotation range of the suction generating unit, the second limiting portion is arranged on the suction generating unit, the housing is provided with an accommodating groove to house the suction generating unit and the dirt collection unit, and the first limiting portion is located in the accommodating groove and opposite to the suction generating unit.

In one embodiment of the handheld vacuum cleaner, the housing is provided with an accommodating groove to house the suction generating unit and the dirt collection unit, a bounce structure is arranged in the accommodating groove, and the bounce structure is opposite to the suction generating unit, the bounce structure includes a thimble matched with the suction generating unit and a first elastic component matched with the thimble.

In one embodiment of the handheld vacuum cleaner, the housing is provided with an accommodating groove to house the suction generating unit and the dirt collection unit, the dirt collection unit further includes a fourth elastic component, one end of the fourth elastic component abuts against the dirt cup, and the other end of the fourth elastic component abuts against the cup cover, when the dirt collection unit is housed in the accommodating groove, a side wall of the accommodating groove abuts against the cup cover to close the cup cover, the fourth elastic component is elastically deformed at this time, when the dirt collection unit is separated from the accommodating groove, the fourth elastic component pushes the cup cover to open, the side wall of the accommodating groove is provided with a resisting structure matched with the cup cover, and the resisting structure includes a resisting portion and a fifth elastic component matched with the resisting portion..

### BRIEF DESCRIPTION OF THE DRAWINGS

FIG. 1 is a perspective structural schematic view of a handheld vacuum cleaner of an embodiment of the disclosure.
FIG. 2 is a perspective schematic view of a housing and a battery pack of a handheld vacuum cleaner of an embodiment of the disclosure.
FIG. 3 is a perspective schematic view of a static conducting portion of a handheld vacuum cleaner of an embodiment of the disclosure.
FIG. 4 is a front view of a body of a handheld vacuum cleaner of an embodiment of the disclosure.
FIG. 5 is a perspective schematic view of a dirt collection unit and a suction generating unit of a handheld vacuum cleaner of an embodiment of the disclosure.
FIG. 6 is a perspective schematic view of a battery pack of the handheld vacuum cleaner of an embodiment of the disclosure.
FIG. 7 is an exploded view of the battery pack of the handheld vacuum cleaner of an embodiment of the disclosure.
FIG. 8 is a perspective schematic view of a housing of the handheld vacuum cleaner of an embodiment of the disclosure.
FIG. 9 is a schematic view of the battery pack of the handheld vacuum cleaner inserted into the housing according to an embodiment of the disclosure.
FIG. 10 is an exploded view of a brush assembly of the handheld vacuum cleaner of an embodiment of the disclosure.
FIG. 11 is a front view of the brush assembly of the handheld vacuum cleaner of an embodiment of the disclosure.
FIG. 12 is a cross-sectional view in a direction AA of FIG. 1.
FIG. 13 is a perspective view of a second dirt suction inlet of the handheld vacuum cleaner of an embodiment of the disclosure.
FIG. 14 is another perspective structural schematic view of a brush assembly of a handheld vacuum cleaner of an embodiment of the disclosure.
FIG. 15 is a perspective structural schematic view of the handheld vacuum cleaner shown in FIG. 14 from another angle.
FIG. 16 is a perspective schematic view of a housing of the handheld vacuum cleaner shown in FIG. 14.
FIG. 17 is a cross-sectional view of a bounce structure.
FIG. 18 is a cross-sectional view of the handheld vacuum cleaner shown in FIG. 14 along a direction DD.
FIG. 19 is a cross-sectional view of a dirt collection unit and a suction generating unit of an embodiment.
FIG. 20 is a cross-sectional view of the dirt collection unit and the suction generating unit from another angle.
FIG. 21 is a perspective view of a suction generating unit of an embodiment.
FIG. 22 is yet another perspective structural schematic view of a handheld vacuum cleaner of an embodiment of the disclosure.
FIG. 23 is a perspective structural schematic view of the handheld vacuum cleaner shown in FIG. 22 from another angle.
FIG. 24 is a perspective view of a housing of the handheld vacuum cleaner shown in FIG. 22.
FIG. 25 is a perspective structural schematic view of a locking assembly of an embodiment.
FIG. 26 is a cross-sectional view of FIG. 24 along the direction DD, at this time the locking assembly is in a closed state.
FIG. 27 is a cross-sectional view of FIG. 24 along the direction DD, at this time the locking assembly is in an open state.
FIG. 28 is another perspective structural schematic view of the dirt collection unit and the suction generating unit of an embodiment.
FIG. 29 is a cross-sectional view of the dirt collection unit and the suction generating unit.
FIG. 30 is an exploded view of a handheld vacuum cleaner of an embodiment of the disclosure.
FIG. 31 is another perspective view of a suction generating unit of an embodiment of the disclosure.
FIG. 32 is a partial enlarged view of an area indicated by a circle in FIG. 31.
FIG. 33 is an exploded view of the suction generating unit of an embodiment of the disclosure.
FIG. 34 is a cross-sectional view of a suction generating unit of an embodiment of the disclosure.
FIG. 35 is another exploded view of a suction generating unit of an embodiment of the disclosure.
FIG. 36 is yet another perspective view of a suction generating unit of an embodiment of the disclosure.
FIG. 37 is yet another exploded view of a suction generating unit of an embodiment of the disclosure.
FIG. 38 is a partial enlarged view of an area indicated by a circle in FIG. 37.
FIG. 39 is a perspective structural schematic view of a handheld vacuum cleaner when an air tube unit is separated from the housing according to an embodiment of the disclosure.
FIG. 40 is a partial enlarged view of an area indicated by a circle in FIG. 39.
FIG. 41 is a cross-sectional view of an air tube unit of an embodiment of the disclosure when the air tube unit is connected with a housing.
FIG. 42 is a top view of a brush assembly of an embodiment of the disclosure in a normal use state.
FIG. 43 is a partial enlarged view of FIG. 42.
FIG. 44 is a cross-sectional view of a brush assembly of an embodiment of the disclosure in a normal use state.
FIG. 45 is a cross-sectional view of the brush assembly of an embodiment of the disclosure in an upright state.
FIG. 46 is a structural schematic view showing a second magnetic component inserting into a first magnetic component when the brush assembly is in an upright state according to an embodiment of the disclosure.
FIG. 47 is a cross-sectional view of another brush assembly of an embodiment of the disclosure in an upright state.
FIG. 48 is a cross-sectional view of a third brush assembly of an embodiment of the disclosure in an upright state.
FIG. 49 is a cross-sectional view of a fourth brush assembly of an embodiment of the disclosure in a normal use.
FIG. 50 is a top view of the fourth brush assembly of an embodiment of the disclosure in a normal use.
FIG. 51 is a partial enlarged view of an area indicated by a circle in FIG. 50.
FIG. 52 is a cross-sectional view of the fourth brush assembly of an embodiment of the disclosure in an upright state.
FIG. 53 is a top view of the fourth brush assembly of an embodiment of the disclosure in an upright state.
FIG. 54 is an axonometric view of a vacuum cleaner brush assembly in an embodiment of the disclosure.
FIG. 55 is an exploded schematic view of a brush housing of the vacuum cleaner brush assembly in an embodiment of the disclosure.
FIG. 56 is a structural schematic view of an agitator brush in an embodiment of the vacuum cleaner brush assembly of the disclosure.
FIG. 57 is a schematic view of a first supporting component in an embodiment of the vacuum cleaner brush assembly of the disclosure.
FIG. 58 is an exploded schematic view of the first supporting component in an embodiment of the vacuum cleaner brush assembly of the disclosure.
FIG. 59 is a schematic view indicating how the first supporting component is mounted in an embodiment of the vacuum cleaner brush assembly of the disclosure.
FIG. 60 is an enlarged view of a part A in FIG. 57, which mainly shows a structure of a button.
FIG. 61 is an enlarged view of a part B in FIG. 59, which mainly shows a structure of a clamping block.
FIG. 62 is a schematic view of a second supporting component in an embodiment of the vacuum cleaner brush assembly of the disclosure.
FIG. 63 is an exploded schematic view of the second supporting component in an embodiment of the vacuum cleaner brush assembly of the disclosure.
FIG. 64 is an enlarged view of a part C in FIG. 62, which is mainly a structure of a power component.
FIG. 65 is a cross-sectional view of an embodiment of the vacuum cleaner brush assembly of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the spirit of the disclosure.

It should be noted that figures provided in these embodiments only illustrate a basic idea of the disclosure in a schematic manner. The figures only show the assemblies related to the disclosure instead of drawing according to number, shape and size of the assemblies in actual implementation. In its actual implementation, type, quantity, and ratio of each assembly may be changed at will, and its assembly layout type may also be more complicated.

The conventional handheld vacuum cleaners still have following shortcomings:

The conventional handheld vacuum cleaners will generate a lot of static electricity when they absorb dust during use. If the static electricity is not discharged in time, the static electricity will accumulate, the accumulated static electricity will harm the whole circuit on the one hand, and on the other hand, a large amount of the static electricity will be released instantly when touched by the user, which will cause electric shock to the user.

Mounting and fastening of the battery pack in the conventional handheld vacuum cleaner results in inconvenient disassembly of the battery pack, so that the battery pack may only be charged together with the handheld vacuum cleaner instead of being charged separately.

Due to unreasonable design of the positions and sizes of the dirt suction inlet of the dirt cup and the dirt suction inlet of the vacuum cleaner brush of the conventional handheld vacuum cleaner, the vacuum cleaner has low dirt suction efficiency.

Due to unreasonable structural layout of the conventional handheld vacuum cleaner, it does not conform to ergonomics, which affects the user's experience.

Due to unreasonable layout position of the display of the conventional handheld vacuum cleaner, the user cannot understand and adjust relevant operation parameters of the handheld vacuum cleaner in real time, which affects the user's experience.

Due to unreasonable structure of the dirt separation unit of the conventional handheld vacuum cleaner, it results in an unsatisfactory separation effect on a separation and screening of debris and dust particles in the dirty air.

The structure layout and fixing of the motor of the conventional handheld vacuum cleaner are unreasonable, which not only affects operation, but also generates a lot of noise.

The conventional vacuum cleaners generally need to be equipped with special accessories for vacuum cleaners to remove dust during use. Vacuum cleaner accessories include floor brushes, mite removal brushes, flat suction, square brushes, dual-purpose brushes, etc. Users can replace the accessories according to their needs. The conventional connection structure cannot realize quick disassembly and assembly.

A vertical locking structure of the conventional vacuum cleaner brush basically relies on an elastic pre-tightening structure. Such a structure may cause abrasion. After material is used for a period of time, the structure is easy to fail and generate very harsh friction noise.

In addition, the conventional handheld vacuum cleaners have a wide variety of vacuum cleaner brushes. According to the applicable models, they can be divided into brush heads for vertical vacuum cleaners and brushes for horizontal vacuum cleaners. Generally, a brush for a vertical vacuum cleaner is directly connected with a main bracket of the vacuum cleaner movably for use. A brush for a horizontal vacuum cleaner is usually detachably connected with a telescopic connecting rod for a user to hold and to be expanded/contracted for use.

At present, in an electric brush of a vacuum cleaner on the market, when cleaning the floor, the agitator brush tends to be entangled with hairs, especially when excessive hairs accumulate in gaps between left and right end surfaces of an agitator brush and inner surfaces of the left and right covers, a friction medium will be formed. Then heat is generated due to the friction of the agitator brush at a high speed, so that side covers and end surfaces of the agitator brush are partially deformed and melted, which causes the agitator brush to jam and fail to work normally. Therefore, the vacuum cleaner brush in the conventional art also needs to be improved.

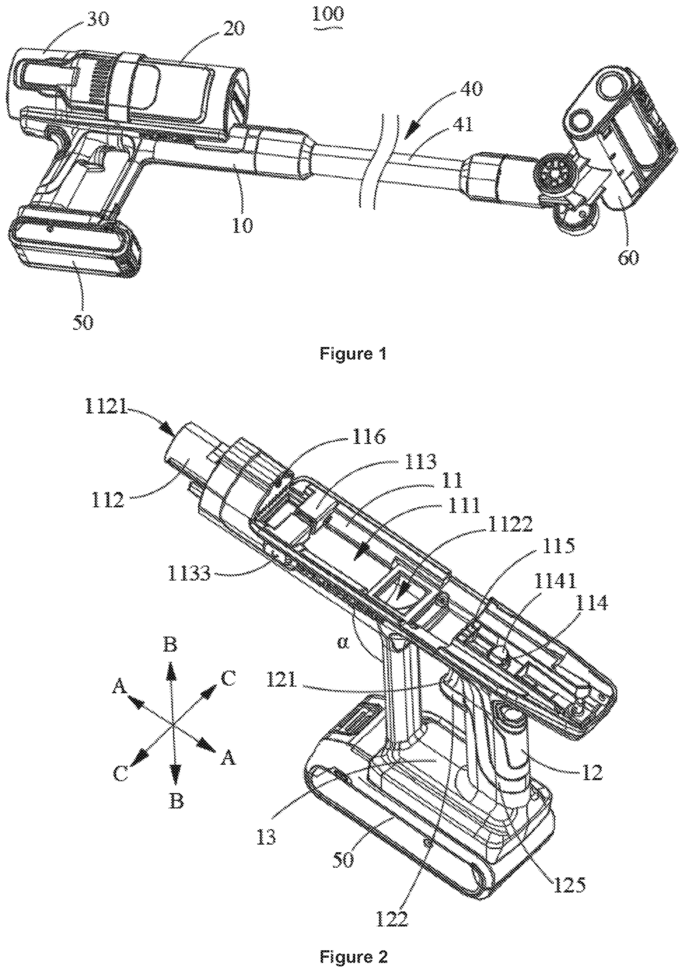

Please refer to FIG. 1. The disclosure provides a handheld vacuum cleaner 100. The handheld vacuum cleaner 100 includes a housing 10, a dirt collection unit 20 mounted on the housing 10, a suction generating unit 30, an air tube unit 40, a battery pack 50 and a brush assembly 60.

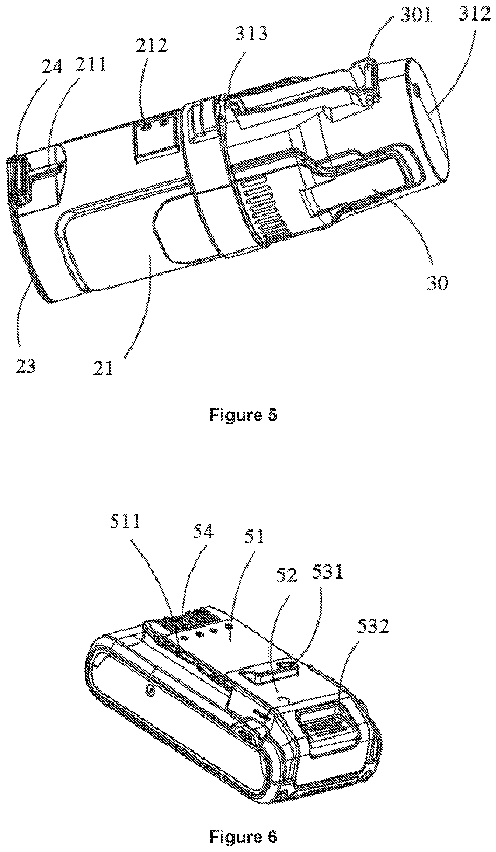

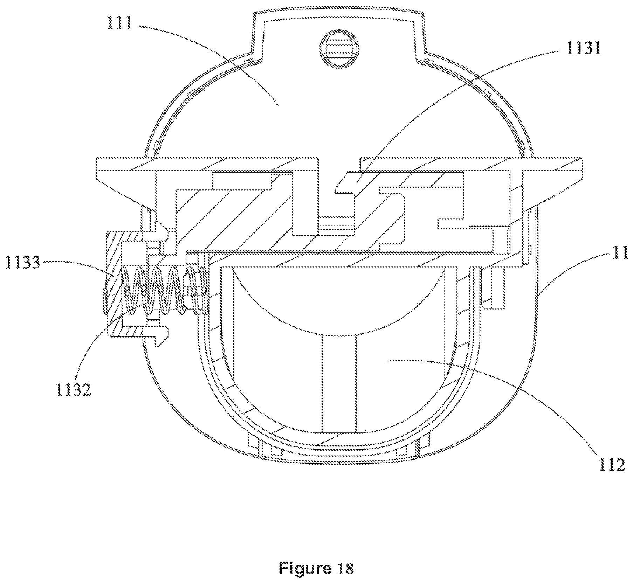

Please refer to FIG.1, FIG. 2, FIG. 17 and FIG. 18. The housing 10 includes a body 11 arranged along a first direction AA, a holding portion 12 extending outward from one side of the body 11 along a second direction BB, and a base 13 located at an end of the holding portion 12 away from the body 11. The body 11 is provided with an accommodation groove 111, an air inlet channel 112, a locking assembly 113, a bounce structure 114 and a first limiting portion 115 arranged along the first direction AA. A cross section of the accommodating groove 111 is substantially arc-shaped for housing the dirt collection unit 20 and the suction generating unit 30. The air inlet channel 112 includes a first air inlet 1121 and a first air outlet 1122. The first air inlet 1121 is arranged along the first direction AA. The first air outlet 1122 passes through a bottom wall of the accommodating groove 111 to match the dirt collection unit 20 in the accommodating groove 111, so that airflow entering from the first air inlet 1121 is introduced into the dirt collection unit 20 through a first dirt suction inlet 212 (shown in FIG. 5) of the dirt collection unit 20. The locking assembly 113 is arranged at a bottom of the accommodating groove 111 and is configured to match the dirt collection unit 20 so as to fix the dirt collection unit 20 and the suction generating unit 30 in the accommodating groove 111. The locking assembly 113 includes a second lock 1131, a second elastic component 1132 matched with the second lock 1131, and an unlocking button 1133 mounted on the second lock 1131. By pressing the unlocking button, the suction generating unit 30 may be lifted up by the bounce structure 114. The second lock 1131 is slidably mounted on the body 11 along a third direction CC, the third direction CC is perpendicular to the first direction AA. One end of the second elastic component 1132 abuts against the body 11, and the other end abuts against the unlocking button 1133. When the unlocking button 1133 is pressed, the second lock 1131 slides along the third direction CC, and then the second elastic component 1132 is elastically deformed. When the unlocking button 1133 is released, the second elastic component 1132 is reset, thereby driving the second lock 1131 and the unlocking button 1133 to be reset. In this embodiment, one end of the second elastic component 1132 abuts against the body 11, and the other end abuts against the unlocking button 1133. However, it should be understood that, in other embodiments, the second elastic component 1132 may also be configured that one end of the second elastic component 1132 abuts against the body 11 and the other end abuts against the second lock 1131. Please refer to FIG. 2, the bounce structure 114 is mounted on the bottom wall of the accommodating groove 111 to match the suction generating unit 30. The bounce structure 114 includes a thimble 1141 and a first elastic component 1142 matched with the thimble 1141. In this embodiment, the bounce structure 114 is arranged to face the suction generating unit 30. However, it should be understood that in other embodiments, the bounce structure 114 may also be arranged to face the dirt collection unit 20 so as to match the dirt collection unit 20. The first limiting portion 115 is located in the accommodating groove 111 and faces the suction generating unit 30. When the unlocking button 1133 is pressed to release the dirt collection unit 20, the bounce structure 114 may lift up the suction generating unit 30, and the suction generating unit 30 rotates around a first pivot component 301 described below, so that the suction generating unit 30 drives the dirt collection unit 20 to be separated from the accommodating groove 111.

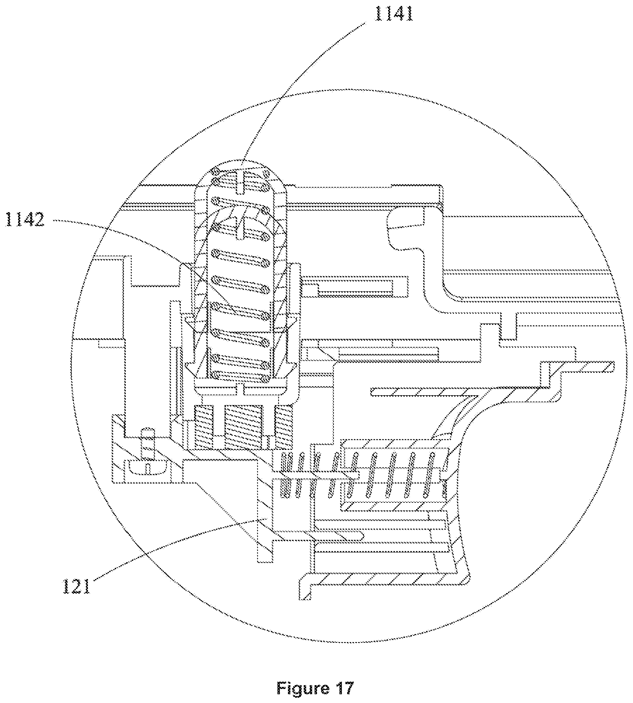

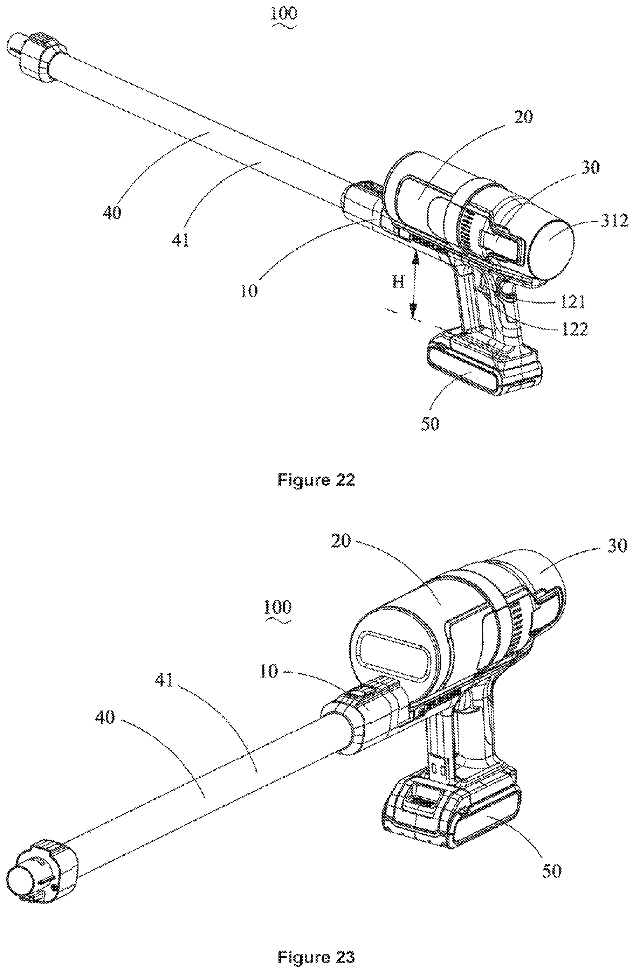

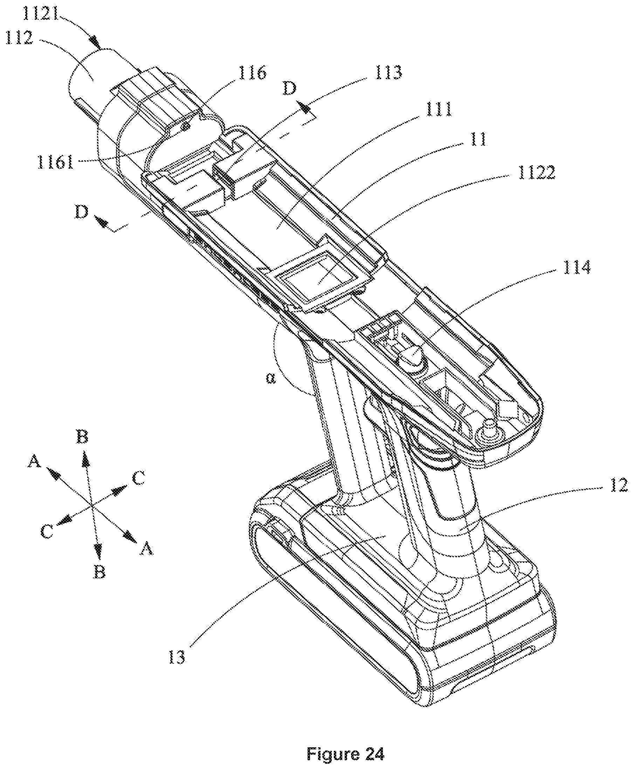

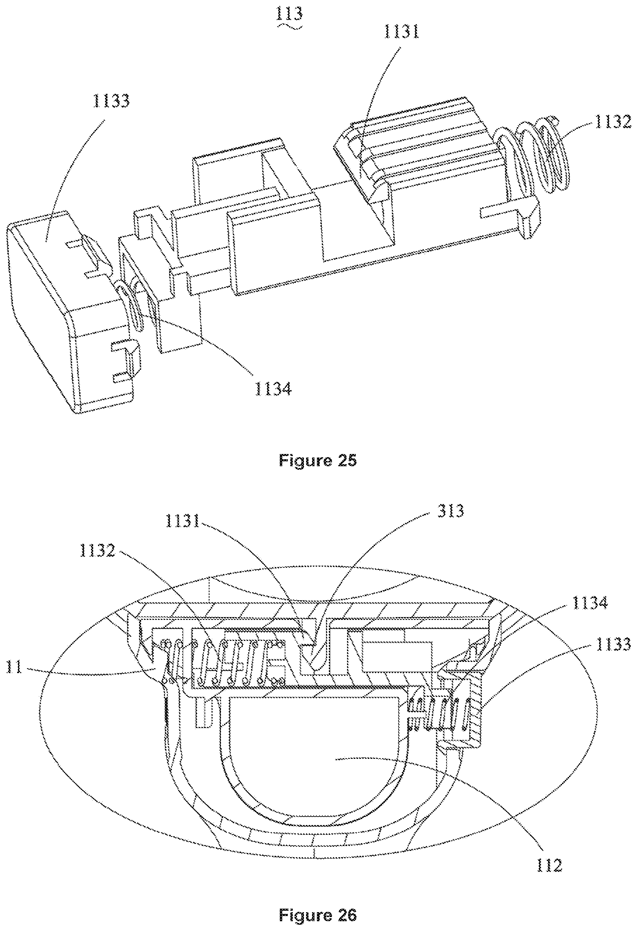

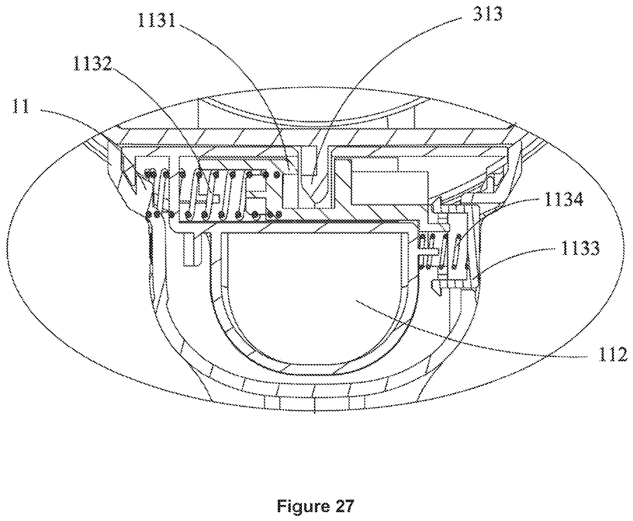

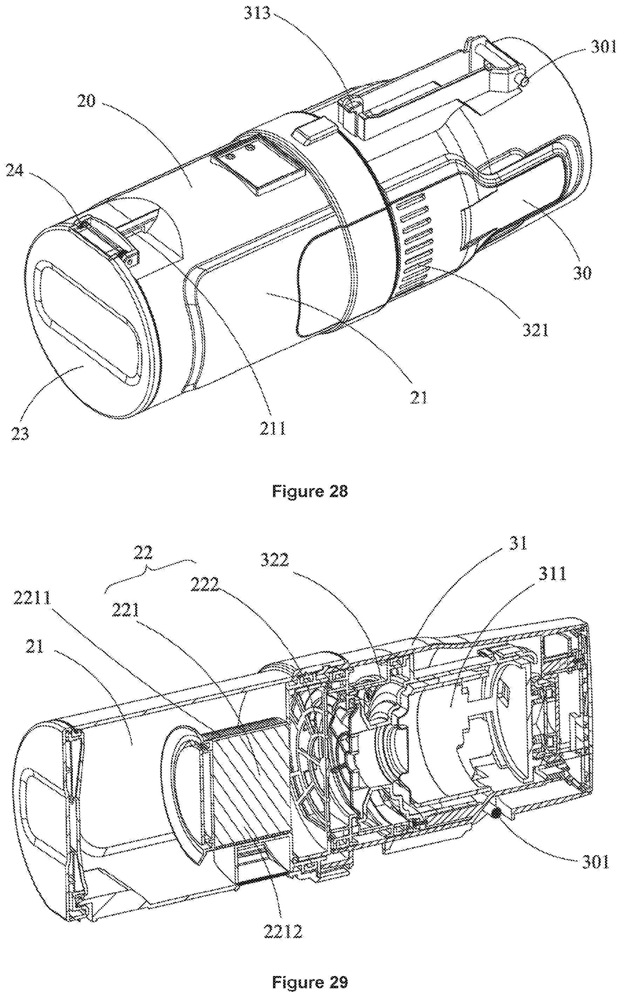

Please refer to FIG. 17, FIG. 22 through FIG. 29. In some embodiments, the locking assembly 113 further includes a third elastic component 1134. One end of the third elastic component 1134 abuts against the second lock 1131, and the other end abuts against the unlocking button 1133. When the unlocking button 1133 is pressed, the third elastic component 1134 is elastically deformed and drives the second lock 1131 to slide along the third direction CC, and then the second elastic component 1132 is elastically deformed. When the unlocking button 1133 is released, the second lock 1131 is reset under an action of the second elastic component 1132, and the unlocking button 1133 is reset under an action of the third elastic component 1134. In this embodiment, the second lock 1131 and the unlocking button 1133 are two independent components. However, in other embodiments, the second lock 1131 and the unlocking button 1133 may also be a whole. In this case, the third elastic component 1134 does not need to be arranged between the second lock 1131 and the unlocking button 1133.

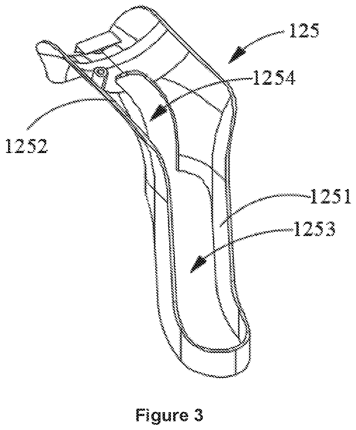

Please refer to FIG. 1, FIG. 2, FIG. 5 and FIG. 24, the dirt collection unit 20 is mounted on the suction generating unit 30 to match the air inlet channel 112 on the housing 10 to collect dust, dirt, etc. The dirt collection unit 20 includes a dirt cup 21, a filter assembly (not shown), a cup cover 23 and a fourth elastic component 24. In this embodiment, the dirt cup 21 is cylindrical. A side wall of the dirt cup 21 is provided with a first dirt suction inlet. The first dirt suction inlet may be rectangular, for example, which corresponds to a position of the first air outlet 1122 of the air inlet channel 112, and the airflow entering from the first air inlet 1121 is introduced into the dirt collection unit 20 through the first dirt suction inlet (shown in FIG. 5) of the dirt collection unit 20. An axis of the dirt cup 21 is parallel to the first direction AA. A side of the dirt cup 21 facing the accommodating groove 111 is provided with a first lock 211 matched with the second lock 1131 of the locking assembly 113, so that the dirt collection unit 20 may be fixed in the accommodating groove 111 through a matching of the first lock 211 and the second lock 1131. In this embodiment, the first lock 211 is arranged on the dirt collection unit 20, and the locking assembly 113 is arranged to face the dirt collection unit 20. However, it should be understood that in other embodiments, the first lock 211 may also be arranged on the suction generating unit 30, and the locking assembly 113 is arranged to face the suction generating unit 30 at this time. The cup cover 23 is pivotally mounted on the dirt cup 21. One end of the fourth elastic component 24 abuts against the dirt cup 21, and the other end abuts against the cup cover 23. When the dirt collection unit 20 is separated from the accommodating groove 111, the cup cover 23 is automatically opened under an action of the fourth elastic component 24, so that a user may pour out dirt in the dirt cup 21. When the dirt collection unit 20 is housed in the accommodating groove 111, a side wall of the accommodating groove 111 is facing the cup cover 23 and abuts against the cup cover 23, so that the cup cover 23 is closed. At this time, the fourth elastic component 24 is elastically deformed. In this embodiment, the fourth elastic component 24 is a torsion spring. Please refer to FIG. 3. In some embodiments, the body 11 is further provided with a resisting structure 116 matched with the cup cover 23. The resisting structure 116 includes a resisting portion 1161 and a fifth elastic component (not shown) matched with the resisting portion 1161. When the dirt collection unit 20 is housed in the accommodating groove 111, the resisting structure 116 abuts against the cup cover 23, so that the cup cover 23 is in a closed state, and the fourth elastic component 24 is elastically deformed at this time.

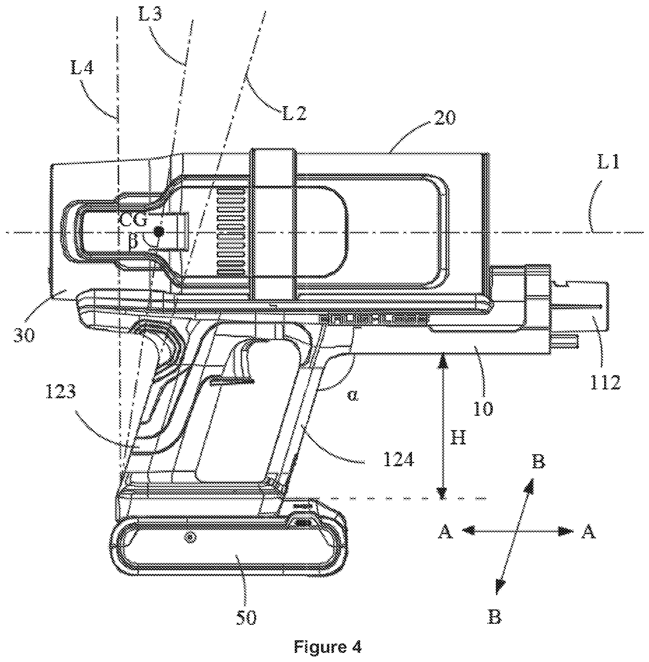

Please refer to FIG. 1, FIG. 2, FIG. 4, and FIG. 5. The suction generating unit 30 is pivotally mounted on the body 11 through the first pivot component 301 so that the suction generating unit 30 may rotate around the first pivot component 301. In this embodiment, the first pivot component 301 is a pivot shaft, but it should be understood that in other embodiments, the first pivot component 301 may also be a shaft hole. The suction generating unit 30 includes a body shell 31, a first motor (not shown) arranged in the body shell 31, an impeller (not shown) mounted on the first motor, and an air outlet portion. The body shell 31 is provided with a housing cavity 311, a display screen 312 (as shown in FIG. 1), and a second limiting portion 313. The housing cavity 311 is used for housing the first motor and the impeller. The display screen 312 is configured to display work information of the handheld vacuum cleaner 100. The work information may be power information, charging status information, full-dirt warning information, congestion information, and so on. In some embodiments, the display screen 311 is perpendicular to an axis (which means a first reference line L1 mentioned above) of the first motor. An axis of a motor assembly 34 is parallel to the first direction AA. The second limiting portion 313 is configured to match the first limiting portion 115 to limit a rotation range of the suction generating unit 30. When the first limiting portion 115 abuts against the second limiting portion 313, the suction generating unit 30 may not rotate around the first pivot component 301 in a direction away from the body 11. In this embodiment, the second limiting portion 313 is arranged on the suction generating unit 30, and the first limiting portion 115 is facing the suction generating unit 30. However, it should be understood that in other embodiments, the second limiting portion 313 may also be arranged on the dirt collection unit 20, and the first limiting portion 115 is facing the dirt collection unit 20 at this time. An air outlet portion 32 is arranged at an end of the body shell 31 away from the display screen 312 and is connected and matched with the dirt collection unit 20.

Please refer to FIG. 1 through FIG. 4, the holding portion 12 extends from the bottom of the accommodating groove 111 outwardly along the second direction BB. The holding portion 12 includes a handle 123 and a supporting bracket 124 that are arranged parallel to each other. The handle 123 and the supporting bracket 124 are located between the body 11 and the base 13. The handle 123, the supporting bracket 124, the body 11 and the base 13 together define a parallelogram. In order to eliminate an impact of a large amount of static electricity generated by a dirt absorption of the handheld vacuum cleaner 100 on a human body and electronic components during use, the handle 123 is covered with a static conducting portion 125. The static conducting portion 125 may be electrically connected with a static generating portion (defined as a part where the handheld vacuum cleaner generates static electricity during a process of absorbing dust and dirt, for example, an air tube 41 of the air tube unit 40, the dirt cup 21 of the dirt collection unit 20, etc.) through a metal wire. During an operation of the handheld vacuum cleaner 100, static electricity will be generated on the static generating portion. Since the static generating portion is electrically connected with the static conducting portion 125 of the holding portion 12, static electricity will be transmitted along the metal wire to the static conducting portion 125 of the holding portion, and then transmitted into earth through the human body in time. In an embodiment of the disclosure, one end of the metal wire is fixedly mounted in the air tube 41. The metal wire is attached to an inner wall of the air tube 41 and passes through the housing under the accommodating groove 111. The other end of the metal wire is connected with the bounce structure 114, a bottom of the bounce structure 114 is connected with the static conducting portion 125, and the generated static electricity is led out through the static conducting portion 125. In other embodiments of the disclosure, the metal wire may also be connected with the static conducting portion 125 in other ways. A material of the static conducting portion 125 may be, for example, a conductive ABS rubber (a resistivity may be, for example, from 10⁷Ω to 10¹²Ω), a thermoplastic polyurethane elastomer rubber added with conductive impurities (conductive TPU, a resistivity may be from 10⁴Ω to 10⁹Ω, for example) and other conductive non-metallic materials. Conductive non-metallic materials may avoid a problem of electric shocks that affect the user's experience when using other static electricity lead-out structures like metal wires. Conductive non-metallic materials may improve efficiency of electrostatic conduction without affecting holding, appearance and safety.

Please refer to FIG. 1 through FIG. 4, the static conducting portion 125 may be substantially S-shaped, or may be arranged in any shape that a hand may cover when the handle 123 is held. The static conducting portion 125 includes a first covering portion 1251 that covers a part of a surface of the handle 123 and a second covering portion 1252 that covers a side of a buckle portion close to the body 11. The first covering portion 1251 and the second covering portion 1252 are connected with each other. One end (bottom end) of the first covering portion 1251 close to the base 13 is arranged on a side of the handle 123 away from the supporting bracket 124. One end (top end) of the first covering portion 1251 close to the body 11 is arranged on a side of the handle 123 close to the supporting bracket 124. This may ensure that when the handle 123 of the holding portion 12 is held, no matter how the handle 123 of holding portion 12 is held, the hand is in contact with the static conducting portion 125, which realizes an all-round contact, ensures the efficiency of static electricity conduction, avoids damage to a circuit of the handheld vacuum cleaner and the electric shock to the user by an accumulation of static electricity, and improves the user's experience. In addition, since the static conducting portion 125 arranges only in a partial area of the holding portion 12, production cost may be reduced. A switch button 121 and a lug boss 122 are arranged on the side of the handle 123 close to the supporting bracket 124. The switch button 121 is arranged close to the body 11, and the lug boss 122 is arranged on a side of the switch button 121 away from the body 11. The static conducting portion 125 is provided with a button notch 1254 at a position corresponding to the lug boss 122. The button notch 1254 and an annular opening 1253 of the first covering portion 1251 for the handle to pass through penetrate with each other. As an example, the static conducting portion 125 may be arranged on the holding portion 12 in a form of an encapsulation, or may be integrally with the holding portion 12, which simplifies a preparation process of the static conducting portion 125.

Please refer to FIG. 1, FIG. 2 and FIG. 4, there is an angle α between the holding portion 12 and the body 11. The angle α is from 80 degrees to 140 degrees. In some embodiments, the angle α is from 90 degrees to 120 degrees, for example. In some embodiments, the angle α is from 105 degrees to 115 degrees, for example, 107 degrees, 110 degrees, 113 degrees. A height of the holding portion 12 in a direction perpendicular to the first direction AA is H. The height H is from 85mm to 110mm. The holding portion 12 is further provided with the switch button 121 and the lug boss 122. The switch button 121 is configured to control the operation of the handheld vacuum cleaner 100. The lug boss 122 is on a side of the switch button 121 away from the body 11 for the user to apply a lifting force through the lug boss 122 when the user holds the holding portion 12, and it may also protect the switch button 121 at the same time. In some embodiments, the lug boss 122 is arc-shaped.

Please refer to FIG. 1, FIG. 2 and FIG. 4, the holding portion 12 includes the handle 123 and the supporting bracket 124 that are arranged parallel to each other. The handle 123 and the supporting bracket 124 are located between the body 11 and the base 13. An output shaft of the suction generating unit 30 defines a first reference line L1 parallel to the first direction AA. The side of the handle 123 away from the supporting bracket 124 defines a second reference line L2 parallel to the second direction BB. A vertical line from a bottom end of the handle 123 on the side away from the supporting bracket 124 to the first reference line L1 defines a fourth reference line L4. A connection line from the bottom end of the handle 123 on the side away from the supporting bracket 124 to a center of gravity CG of the first motor of the suction generating unit 30 defines a third reference line L3. An angle between the second reference line L2 and the first reference line L1 is equal to the angle α mentioned above. The center of gravity CG of the first motor is located on the first reference line L1. The center of gravity CG of the first motor is located between an intersection of the first reference line L1 and the second reference line L2 and an intersection of the fourth reference line L4 and the first reference line L1, which means that an angle β between the third reference line L3 and the first reference line L1 is from 60 degrees to 90 degrees, in some embodiments, the angle β between the third reference line L3 and the first reference line L1 is from 80 degrees to 90 degrees such as 82 degrees, 84 degrees, 86 degrees, 88 degrees, etc. Such a design may enable the center of gravity of the first motor of the suction generating unit 30 to be closer to a position of a purlicue of the holding hand, which is ergonomic and gives the user a better experience.

Please refer to FIG. 1, the air tube unit 40 is configured to match the air inlet channel 112 and the brush assembly 60 to perform a function of the handheld vacuum cleaner 100. The air tube unit 40 includes the air tube 41, one end of the air tube unit 40 is in communication with the first air inlet 1121 of the air inlet channel 112, and the other end thereof is in communication with an air tube connection portion 62 of the brush assembly 60. The air tube 41 may be a rigid plastic tube, a steel tube, etc., or a hose.

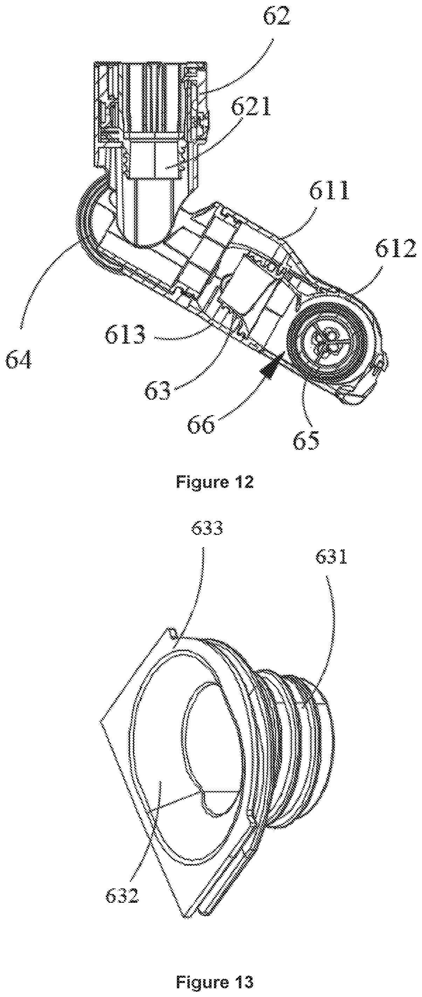

Please refer to FIG. 1, FIG. 10 through FIG. 13, the brush assembly 60 includes a brush housing 61, an agitator brush 65, the air tube connection portion 62, and a traveling portion 64. A rear end of the brush housing 61 is connected with the air tube connection portion 62. The brush housing 61 is provided with an accommodating cavity at a front end of the housing 61, and a rear end of the accommodating cavity is in communication with a second dirt suction inlet 63. The agitator brush 65 is rotatably mounted in the accommodating cavity, and the traveling portion 64 may be, for example, a traveling wheel, which is mounted on a bottom of the rear end of the brush housing 61.

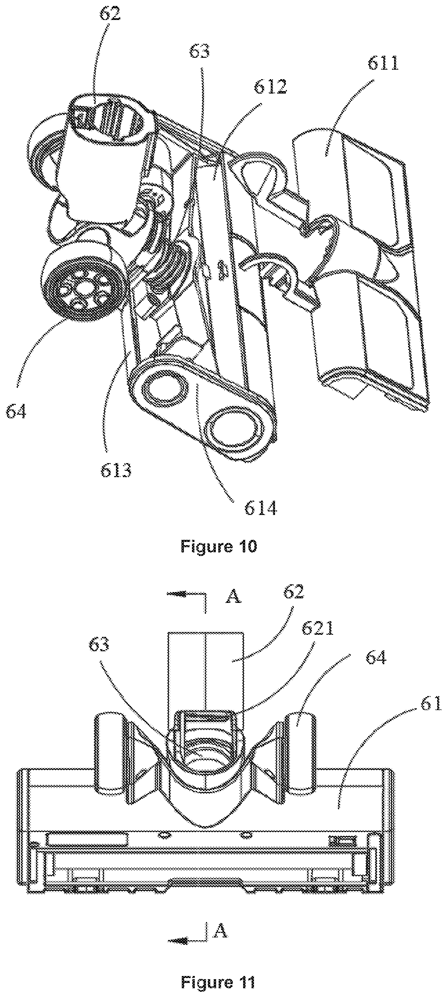

Specifically, please refer to FIG. 10 through FIG. 13. The brush housing 61 includes a brush bottom plate 613, a rear top cover 611, a front top cover 612, and a side sealing plates 614 located on both sides of the brush housing 61. The front top cover 612 covers a front end of the brush bottom plate 613. The rear top cover 611 covers a rear end of the brush housing 61. The front top cover 612, the brush bottom plate 613, and the side sealing plates 614 on both sides jointly define the accommodating cavity. The brush bottom plate 613 is provided with a bottom opening 66 for exposing the agitator brush 65 in an area located at a bottom of the accommodating cavity. The second dirt suction inlet 63 includes a connecting section 633, an enlarged section 632, and a first port 631 that are sequentially arranged. The second dirt suction inlet 63 is connected with a middle of a rear wall of the accommodating cavity through the connecting section 633. The air tube connecting portion 62 is used for connecting with one end of the air tube 41. A second port 621 is arranged at one end of the air tube connecting portion 62 close to the brush housing 61. The first port 631 and the second port 621 may communicate with each other through a hose, for example.

In this embodiment, in order to ensure vacuuming efficiency of the handheld vacuum cleaner 100, an opening area of the first dirt suction inlet 212 of the dirt cup 21, an opening area of the second dirt suction inlet 63, and a cross-sectional area of an inner hole of the air tube 41 need to be satisfy that the opening area of the first dirt suction inlet 212 is smaller than the cross-sectional area of the inner hole of the air tube 41, the opening area of the second dirt suction inlet 63 is smaller than the cross-sectional area of the inner hole of the air tube 41, and the opening area of the first dirt suction inlet 212 is larger than the opening area of the second dirt suction inlet 63. As an example, a ratio of the opening area of the second dirt suction inlet 63 to the cross-sectional area of the inner hole of the air tube 41 is from 0.5 to 0.6, in some embodiments, from 0.53 to 0.56, such as 0.55. As an example, a ratio of the opening area of the first dirt suction inlet 212 to the cross-sectional area of the inner hole of the air tube 41 is from 0.65 to 0.8, in some embodiments, from 0.70 to 0.76, such as 0.72.

When the handheld vacuum cleaner 100 is working, the airflow is sucked into the handheld vacuum cleaner 100 through the brush assembly 60 and the air tube 41 in turn. The airflow enters the air inlet channel 112 through the first air inlet 1121, and enters the dirt cup 21 through the first air outlet 1122 and the first dust suction inlet 212. Then the airflow is filtered by the filter assembly in the dirt cup 21, and finally discharged through an exhaust vent of the suction generating unit 30.

When the user needs to clean dirt in the dirt collection unit 20, first press the unlocking button 1133, and the locking assembly 113 is out of contact with the first lock 211. At this time, the suction generating unit 30 rotates upwards around the first pivot component 301 under an action of the bounce structure 114, which causes the cup cover 23 being out of contact with the resisting structure 116. Then the cup cover 23 is automatically opened under an action of the fourth elastic component 24, thereby facilitating the user to pour out the dirt in the dirt cup 21. When the first limiting portion 115 abuts against the second limiting portion 313, the suction generating unit 30 cannot continue to rotate upward around the first pivot component 301. When the dirt in the dirt cup 21 has been cleaned up, the dirt suction unit 20 needs to be pressed into the accommodating groove 111. At this time, the first lock 211 matches the locking assembly 113 to fix the dirt collection unit 20 and the suction generating unit 30 in the accommodating groove 111, and the resisting structure 116 abuts against the cup cover 23, which enables the cup cover 23 in a closed state. The handheld vacuum cleaner of the embodiment may realize one-key dirt pouring, thereby facilitating users to clean up dirt.

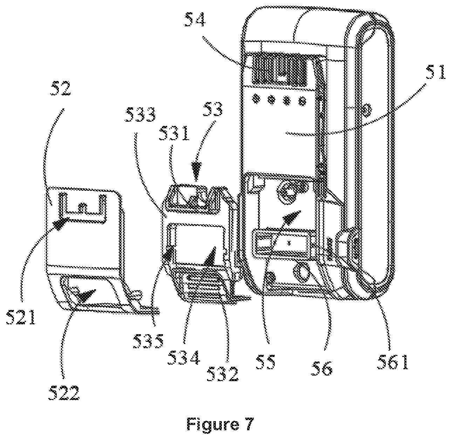

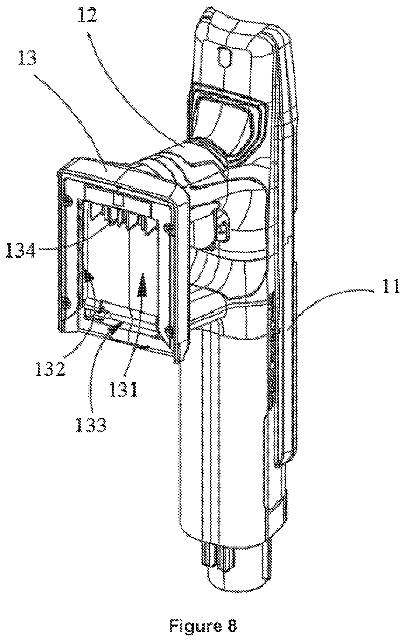

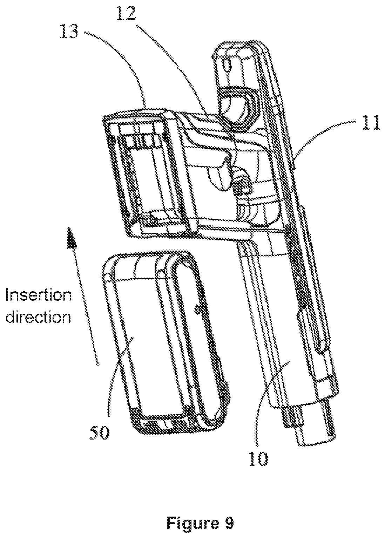

Please refer to FIG. 1, FIG. 2 and FIG. 6 through FIG. 9. The base 13 is detachably connected with the battery pack 50. An opening groove 131 with one open end is arranged on a side of the base 13 away from the holding portion 12. A guiding groove 132 is arranged on a wall of the opening groove 131. A side of the battery pack 50 close to the holding portion 12 is provided with an insertion boss 51 matched with the opening groove 131. The insertion boss 51 of the battery pack 50 may be inserted into the opening groove 131 from the open end of the opening groove 131 along the first direction, and the opening groove 131 at least partially covers the insertion boss 51, so as to prevent the insertion boss 51 of the battery pack 50 from coming out of the opening groove 131 from a position other than the open end of the opening groove 131, and ensure a stability of the battery pack 50.

Please refer to FIG. 1, FIG. 2 and FIG. 6 through FIG. 9. The guiding groove 132 is arranged on the wall of the opening groove 131. The side wall of the insertion boss 51 is provided with an insertion rib 511 matched with the guiding groove 132. When the battery pack 50 is inserted into the base 13, the insertion rib 511 is inserted into the guiding groove 132 to prevent the battery pack 50 from coming out of the opening groove 131 from a non-insertion direction (the first direction AA).

Please refer to FIG. 1, FIG. 2 and FIG. 6 through FIG. 9. A limiting member 53 is arranged on the side of the battery pack 50 close to the holding portion 112. The limiting member 53 includes a limiting body portion 533, a limiting protrusion portion 531 and a limiting button portion 532 which are integrally formed and arranged at both ends of the limiting body portion 533. An end of a bottom of the opening groove 131 of the base 13 close to an insertion end is provided with a limiting clamping groove 133 corresponding to the limiting protrusion portion 531 of the limiting member 53. When the battery pack 50 is inserted into the base 13, the limiting protrusion portion 531 extends into the limiting clamping groove 133, and the limiting protrusion portion 531 and the limiting clamping groove 133 are matched with each other to restrict the battery pack 50 from coming out of the opening groove 131 of the base 13 along an insertion direction.

Please refer to FIG. 1, FIG. 2 and FIG. 6 through FIG. 9. A limiting mounting groove 55 and a limiting cover 52 for covering the limiting mounting groove 55 are arranged on the side of the battery pack 50 close to the holding portion 12. The limiting mounting groove 55 is arranged at an end of the insertion protrusion portion away from the insertion end. The limiting mounting groove 55 is configured to mount the limiting member 53. The limiting cover 52 covers on the limiting mounting groove 55. The limiting cover 52 is provided with a first opening 521 and a second opening 522 at positions corresponding to the limiting protrusion portion 531 and the limiting button portion 532. The limiting protrusion portion 531 and the limiting button portion 532 are exposed from the first opening 521 and the second opening 522, and the limiting protrusion portion 531 needs to protrude from a surface of the limiting cover 52 when the battery pack 50 is removed and inserted in the base 13.

Please refer to FIG. 1, FIG. 2 and FIG. 6 through FIG. 9. A middle of the limiting mounting groove 55 is provided with a limiting mounting protrusion block 56. A limiting through hole 534 is arranged in a middle of the limiting body portion 533 of the limiting member 53 to match the limiting mounting protrusion block 56. The limiting member 53 is sleeved on the limiting mounting protrusion block 56 through the limiting through hole 534, and the limiting mounting protrusion block 56 may play a certain guiding role. In order to achieve a better guiding effect, a guiding rib 561 is arranged on an outer side wall of the limiting mounting protrusion block 56, an inner side wall of the limiting through hole 534 is provided with a guiding groove 535 matched with the guiding rib 561. When the limiting member 53 is sleeved on the limiting mounting protrusion block 56, the guiding rib 561 is inserted into the guiding groove 535 to realize a guiding function. It should be understood that in other embodiments, it may be that the guiding groove 535 is arranged on a side wall of the limiting mounting protrusion block 56 and a guiding rib 561 is arranged on a side wall of the limiting through hole 534. A fifth elastic component (not shown) is further arranged between the limiting member 53 and a bottom surface of the limiting mounting groove 55. The fifth elastic component may lift up the limiting member 53 when the battery pack 50 is removed or inserted into the base 13, and the limiting protrusion portion 531 and the limiting button portion 532 respectively protrude from the first opening 521 and the second opening 522. When the battery pack 50 is inserted into the base 13, the fifth elastic component enables the limiting protrusion portion 531 of the limiting member 53 to be inserted into the limiting clamping groove 133 of the base 13, which plays a limiting role and prevents the battery pack 50 from sliding out of the base 13 along the first direction. When the battery pack 50 is released, as long as the limiting button portion 532 is pressed downward, the limiting protrusion portion 531 moves downward synchronously with the limiting button portion 532 and retract to a corresponding opening of the limiting cover 52. As a result, the limiting protrusion portion 531 escapes from the limiting clamping groove 133, and then the battery pack 50 may be removed from the base 13 along a direction opposite to the insertion direction.

In this embodiment, the fifth elastic component is provided with two. One is arranged between the limiting protrusion portion 531 and the bottom surface of the limiting mounting groove 55, and the other one is arranged between the limiting button portion 532 and the bottom surface of the limiting mounting groove 55. In addition, a structure for mounting an elastic component is arranged on positions of the limiting protrusion portion 531, the bottom surface of the limiting mounting groove 55 and the limiting button portion 532 corresponding to the fourth elastic component.

Please refer to FIG. 1, FIG. 2 and FIG. 6 through FIG. 9. The base 13 is located on a side of the holding portion 12 away from the body 11, and is provided with a connecting port 134 (not shown). The connecting port 134 is configured to connect with an output plug-in 54 of the battery pack 50 to obtain power of the battery pack 50.

In the handheld vacuum cleaner of the above embodiments, the battery pack and the housing may be assembled and disassembled conveniently and quickly, and which ensures stability of the battery pack. When charging the battery pack, the battery pack may be charged together with the entire vacuum cleaner, or the battery pack may be charged separately. The handheld vacuum cleaner of the embodiments, through being covered the static conducting portion and electrically connecting the static conducting portion with the static generating portion of the handheld vacuum cleaner, may introduce the static electricity generated by the static generating portion into the ground and avoid the damage to the circuit of the whole vacuum cleaner and the electric shock to the user due to the accumulation of the static electricity, which improves the user's experience. The handheld vacuum cleaner of the embodiments controls and adjusts the position of the center of gravity of the first motor of the suction generating unit, so that the center of gravity of the first motor of the suction generating unit is closer to the position of the purlicue the holding hand, which is ergonomic and gives the user a better experience. The handheld vacuum cleaner of the embodiments can improve the dirt suction efficiency of the handheld vacuum cleaner through limiting positions of the first dirt suction inlet of the dirt cup and the second dirt suction inlet of the brush assembly and designing the ratios between opening areas of the two dirt suction inlet to the cross-sectional area of the inner hole of the air tube.

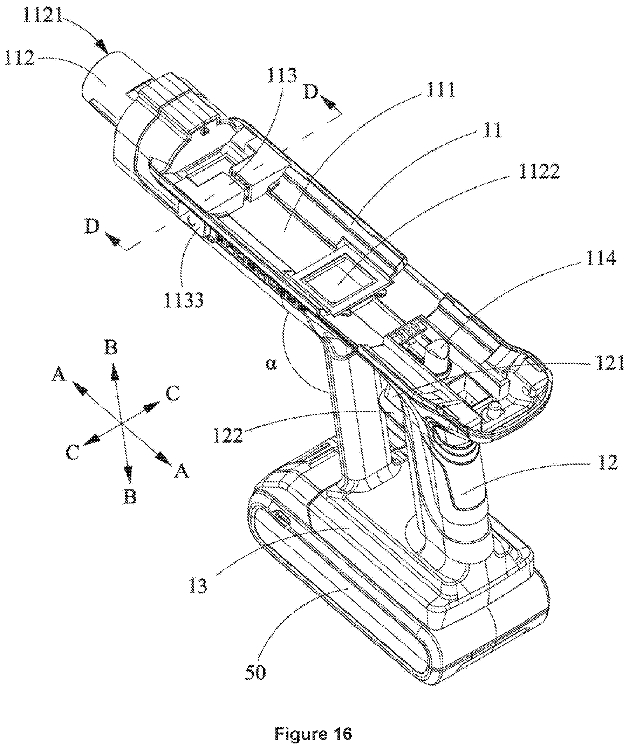

Please refer to FIG. 16, FIG. 14, and FIG. 15, the base 13 is on the side of the holding portion 12 away from the body 11, and a connecting port (not shown) is arranged on the base 13. The connecting port is configured to connect with the battery pack 50 to obtain the power of the battery pack 50.

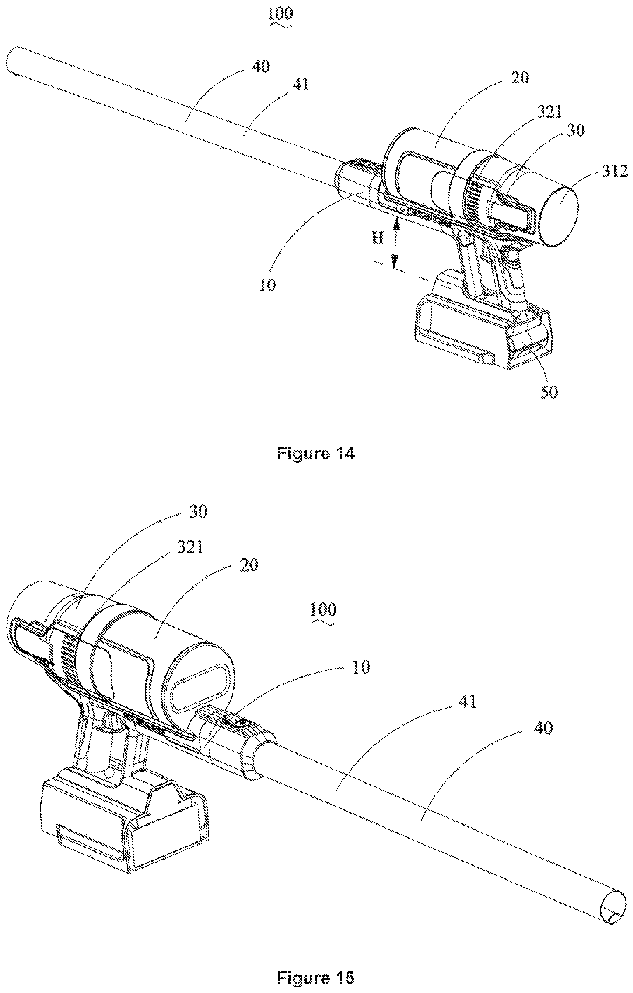

Please refer to FIG. 14, FIG. 15, and FIG. 19, the suction generating unit includes the first motor and the air outlet portion. The dirt collection unit and the suction generating unit are above the housing, and the dirt collection unit is connected with an end of the suction generating unit provided with an air outlet portion. The filter assembly 22 includes a first filter assembly 221 and a second filter assembly 222. The first filter assembly 221 is located in the dirt cup 21 for separating debris, dust particles, etc. in the dirty air, so that the debris, dust particles, etc. may remain in the dirt cup 21. In this embodiment, the first filter assembly 221 is substantially cylindrical and includes a metal filter 2211 in a ring shape and a filter element 2212 arranged in the filter 2211. The filter 2211 may be a high-density filter, for example, to separate visible dirt. A density of the high-density filter may be from 30 mesh to 120 mesh. In order to achieve a better filtering effect, the density of the high-density filter may be from 60 mesh to 90 mesh, such as 80 mesh. The filter 2211 may be a metal filter, for example. The filter element 212 may be, for example, high-standard paper filter element, which may block nano-scale dirt in the dirt cup. The second filter assembly 222 is arranged at an end of the dirt collection unit 20 away from the first air inlet 1121, which means at an end of the dirt cup 21 away from the first air inlet 1121. The second filter assembly 222 is connected with the suction generating unit 30. In some embodiments, the second filter assembly 23 is provided with a filter component.

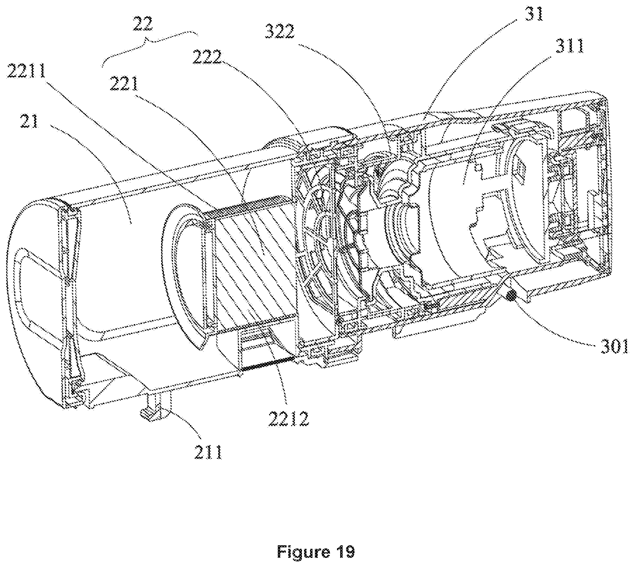

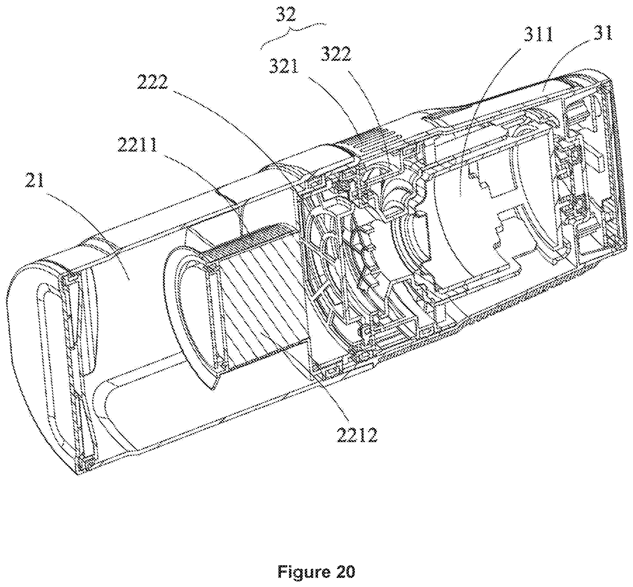

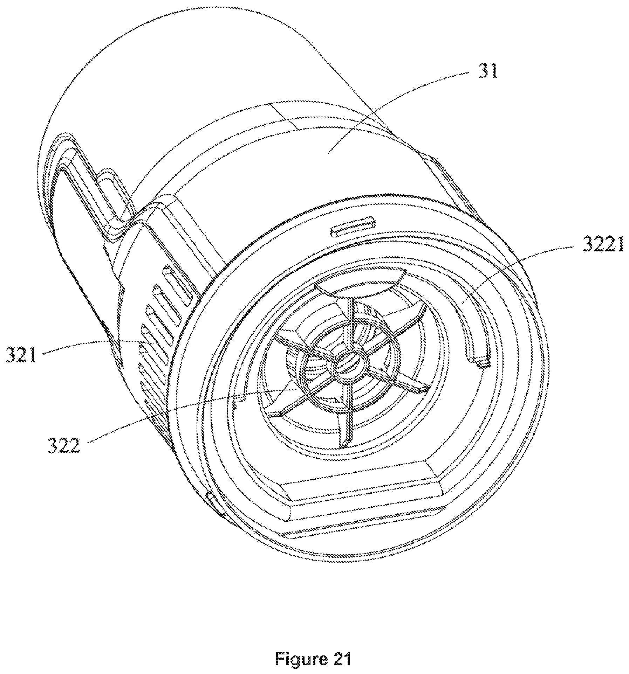

Please refer to FIG. 19 and FIG. 20, the air outlet portion 32 is arranged at the end of the body shell 31 away from the display screen 312, and is connected and matched with the dirt collection unit 20. The air outlet portion 32 includes an air outlet 321 arranged at an end of the body shell 31 away from the display screen 312, and an air outlet filter assembly 322 located in the body shell 31 corresponding to the air outlet 321. An air outlet direction of the air outlet 321 is perpendicular to the first direction AA. The air outlet filter assembly 322 is configured to further filter the airflow before being discharged from the handheld vacuum cleaner 100. In some embodiments, please refer to FIG. 21, the air outlet filter assembly 322 is provided with a second handle 3221 to facilitate the user to take out and replace the air outlet filter assembly 322. The second handle 3221 is pivotally mounted on the air outlet filter assembly 322. Wherein, the axis of the dirt cup 21, an axis of the first filter assembly 221, an axis of the second filter assembly 222, an axis of the air outlet filter assembly 322, and the axis of the first motor are collinear and are arranged in sequence along the axis. With this arrangement, a volume of the handheld vacuum cleaner 100 may be effectively reduced, and noise of the handheld vacuum cleaner 100 may be reduced. At the same time, it is also convenient for workers to assemble and disassemble.

When the handheld vacuum cleaner 100 is working, the airflow is sucked into the handheld vacuum cleaner 100 through the air tube 41. The airflow enters the air inlet channel 112 through the first air inlet 1121, and then enters the dirt cup 21 through the first air outlet 1122. The airflow is filtered by the first filter assembly 221 in the dirt cup 21, then filtered by the second filter assembly 222, and finally filtered by the air outlet filter assembly 322 and discharged from the air outlet 321.

When the user needs to disassemble the dirt collection unit 20, first press the unlocking button 1133, and then the second lock 1131 slides along the third direction CC, so that the second lock is out of contact with the first lock 211. At this time, the dirt collection unit 20 moves upward under the action of the bounce structure 114, thereby driving the suction generating unit 30 to rotate around the first pivot component 301, which enables dirt collection unit 20 and the suction generating unit 30 to be separated from the accommodating groove 111 and facilitates the user to disassemble the dirt collection unit 20.

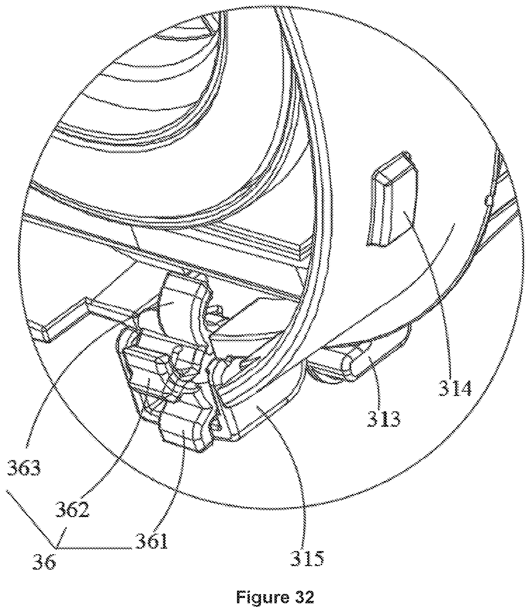

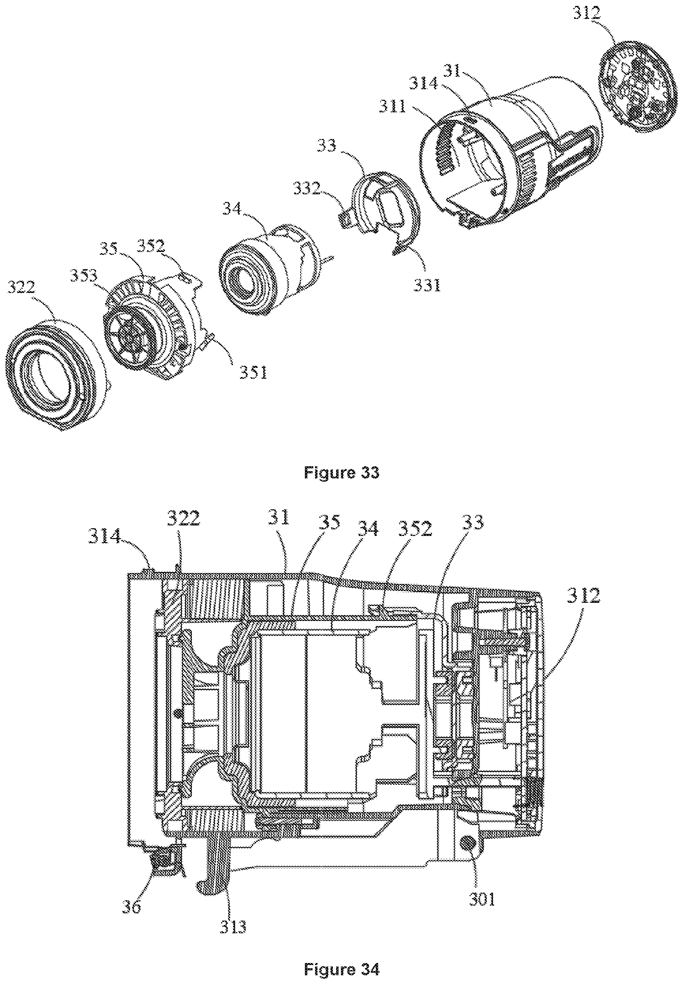

Please refer to FIG. 1 through FIG. 34, the suction generating unit 30 includes the body shell 31, a suction assembly arranged on the body shell 31, the air outlet portion 32 and the display screen 312. The body shell 31 is provided with the housing cavity 311 for housing the suction assembly, and the suction assembly is mounted in the housing cavity 311.

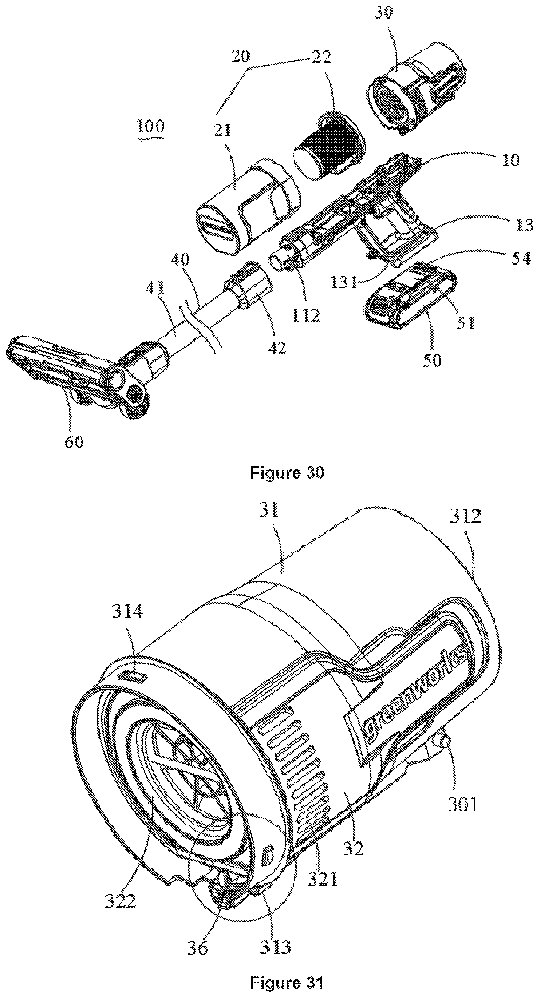

Please refer to FIG. 31 through FIG. 34, the suction assembly is assembled in the body shell 31. The suction assembly includes a motor lower cover 33, a motor assembly 34 (details not shown in the figure), and a motor cover 35 that are sequentially arranged along an end away from the dirt collection unit 20 to an end close to the dirt collection unit 20. The motor assembly 34 includes the first motor (not shown) and the impeller (not shown) mounted on the first motor. The motor assembly 34 is surrounded and fixed by the motor cover 35 and the motor lower cover 33 and mounted in the housing cavity 311 of the body shell 31. The motor cover 35 includes a second air inlet 353 located at the center of one end of the motor cover 35, a plurality of second connecting portions 351 located at the other end thereof and extending toward the motor lower cover 33, and a clamping protrusion 352 located on the second connecting portion 351. The motor cover 35 may be made of, for example, a non-metal material, in some embodiments, a plastic material, which may reduce a weight of the first motor. The motor lower cover 33 includes a plurality of first connecting portions 331 defined at one end of the motor lower cover 33. The first connecting portions 331 extend toward the motor cover 35 and correspond to the second connecting portions 351. And the motor lower cover 33 further includes a clamping groove 332 arranged on the first connecting portion 331 and matched with the clamping protrusion 352 on the second connecting portion 351. The motor cover 35 and the motor lower cover 33 may be connected by the clamping groove 332 and the clamping protrusion 352 to define a structure that surrounds and fixes the motor assembly 34. Of course, it is also possible to be provided with the clamping protrusion 352 on the first connecting portion 351 and the clamping groove 332 on the second connecting portion 351.

Please refer to FIG. 31 through FIG. 34, the air outlet portion 32 includes an exhaust vent 321 arranged at the end of the body shell 31 away from the display screen 312, and the air outlet filter assembly 322 located in the body shell 31 and corresponding to the exhaust vent 321. One end of the air outlet filter assembly 322 facing the motor cover 35 is connected with the second air inlet 353 of the motor cover 35. An air outlet direction of the exhaust vent 321 is perpendicular to the first direction AA. The air outlet filter assembly 322 is configured to further filter the airflow before being discharged from the handheld vacuum cleaner 100. Wherein, the axis of the dirt cup 21, the axis of the first filter assembly 221, the axis of the second filter assembly 222, the axis of the air outlet filter assembly 322, and the axis of the first motor are collinear and arranged in sequence along the axis. With this arrangement, the volume of the handheld vacuum cleaner 100 may be effectively reduced, and the noise of the handheld vacuum cleaner 100 may be reduced. At the same time, it is also convenient to assemble and disassemble.

Please refer to FIG. 31 through FIG. 35. A display screen 312 is arranged at an end of the body shell 31 away from the dirt collection unit 20, and the display screen 312 is configured to display the working information of the handheld vacuum cleaner 100. The work information may be power information, charging status information, full-dirt warning information, air channel blockage information, agitator brush blocked, use time, use power information, and so on. The display screen 312 includes a transparent panel 3124, a label 3123, a light-shielding plate 3122, and a light plate 3121 arranged in a direction away from the dirt collection unit 20 in sequence. An edge of the light plate 3121 is clamped and fixed to a side of the light-shielding board 3122 away from the label 3123. The light-shielding board 3122 may be fixed to the end of the body shell 31 away from the dirt collection unit 20 by bolts, for example. The label 3123 is attached to a side of the transparent panel 3124 facing the light-shielding plate 3122. The transparent panel 3124 may be a black transparent panel, for example. The transparent panel 3124 is fixed on a side of the light-shielding board plate 3122 away from the light plate 3121 through inserting a buckle component 3125 arranged on an edge of the transparent panel 3124 into a buckle hole 3126 of the light-shielding plate 3122. After light of the light plate 3121 passes through the light-shielding plate 3122 to light up a colored part of the label, display content may be seen through the transparent panel 3124. In some embodiments, the display screen 312 is perpendicular to the axis of the first motor.

**A** touch screen area is arranged on the display screen 312 for adjusting the power of the handheld vacuum cleaner 100. The human body has a certain capacitance. When adopting capacitive touch sensing, a finger is touched to increase the capacitance, which causes a count value to increase. The capacitance amplifies count value and converts count value into an analog signal, which is fed back to a control chip to complete the entire adjustment process. The touch sensing is capacitive and not limited to capacitive, and a resistive touch sensing may also be used. Under different operating conditions, different powers may be selected through a finger touch sensing. Since the display screen 312 faces the user's side, relevant parameters of the handheld vacuum cleaner may be displayed intuitively, and power of the vacuum cleaner may be adjusted by touching the screen, which enables the operation to be more intuitive and more user-friendly.

Please refer to FIG. 31 through FIG. 38, the dirt collection unit 20 is detachably mounted on an end of the suction generating unit 30 away from the display screen 312. In this embodiment, a plurality of locking grooves 213 are arranged on an inner side wall of the dirt cup 21 of the dirt collecting unit 20 close to the end of the suction generating unit 30, and the plurality of locking grooves 213 are distributed along a circumferential direction of one end of the dirt collection unit 20 close to the suction generating unit 30. The locking groove 213 is generally in an "L" shape, and includes a vertical groove section parallel to an axial direction of the dirt cup 21 and a horizontal groove section perpendicular to the vertical groove section. The horizontal groove section is connected with a bottom end of the vertical groove section. A plurality of locking protrusion blocks 314 corresponding to the locking grooves 213 are arranged in a circumferential direction of an outer side wall of the end of the suction generating unit 30 close to the dirt collection unit 20. When the dirt collection unit 20 are mounted and connected with the suction generating unit 30, the locking protrusion block 314 is first inserted into a bottom of the locking groove 213 along the vertical groove section of the locking groove 213, and then the locking protrusion block 31 is rotated to be clamped into the horizontal groove section of the locking groove 213, which completes a locking mounting of the dirt collection unit 20 with the suction generating unit 30. It should be understood that in other embodiments, the locking groove 213 may also be arranged at the end of the suction generating unit 30 close to the dirt collection unit 20, and the locking protrusion block 314 is arranged at the end of the dirt collection unit 20 close to the suction generating unit 30.

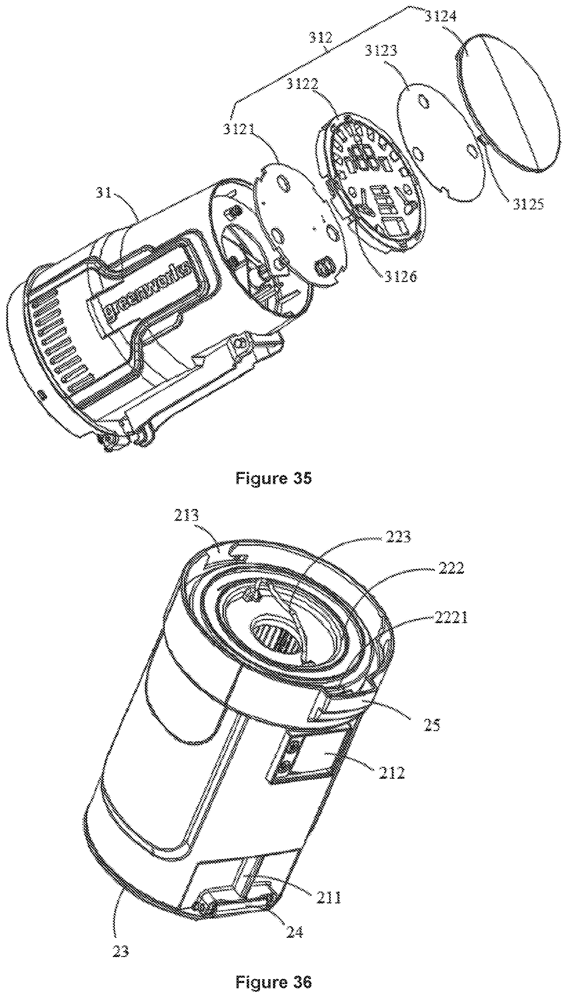

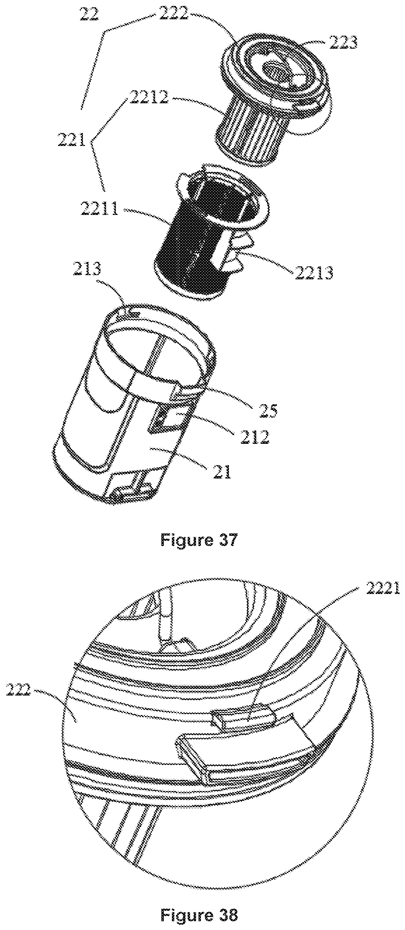

Please refer to FIG. 36 and FIG. 37. When the handheld vacuum cleaner 100 is working, the airflow is drawn into the handheld vacuum cleaner 100 through the brush assembly 60 and the air channel 41 in sequence. The airflow enters the air inlet channel 112 through the first air inlet 1121, and enters the dirt cup 21 through the first air outlet 1122. The airflow in the dirt cup 21 first passes through the high-density filter 2211 of the first filter assembly 221 to separate the visible dirt, and then an inner high-specification paper filter element is configured to block nano-level dirt in the dirt cup 21 to filter. The airflow then is filtered by the second filter assembly 222, finally filtered by the air outlet filter assembly 322, and then discharged into air from the air outlet 321 to realize the entire cleaning process.

Please refer to FIG. 36 and FIG. 37, an air guiding groove 2213 is arranged on a side wall of the filter 2211 at a position corresponding to the first dirt suction inlet 212 of the dirt cup. No filter holes are arranged at a bottom of the air guiding groove 2213. A top end of the air guiding groove 2213 is close to the first dirt suction inlet 212 of the dirt cup 21 and is along an extending direction of the air guiding groove 2213. One end of the air guiding groove 2213 is closed, and the other end thereof is open. The airflow introduced into the dirt collection unit 20 through the first dirt suction inlet 212 will not directly contact a side wall of the filter 2211, but will be blown out through an opening of the air guiding groove 2213 through a diversion effect of the air guiding groove 2213, and a rotating wind that may airflow between the filter 2211 and the dirt cup 21 is generated under an action of the inner wall of the dirt cup 21, which not only improves efficiency of dirt separation, but also avoids clogging of filter holes at a position corresponding to the first dirt suction inlet 212.

Please refer to FIG. 36 and FIG. 37, the second filter assembly 222 is arranged at the end of the dirt collection unit 20 away from the first air inlet 1121. Which means at the end of the dirt cup 21 away from the first air inlet 1121, the second filter assembly 222 is connected with one end of the filter element 2212 close to the suction generating unit 30, and may be drawn out from the filter together. In some embodiments, a filter component is arranged in the second filter assembly 222. In order to facilitate a removal of the filter element 2212 and the second filter assembly 222, a lifting handle 223 is arranged at one end of the second filter assembly 222 close to the suction generating unit 30.

Please refer to FIG. 31 through FIG. 38. In this embodiment, a filter anti-leaking-mounting structure is further arranged between the dirt collection unit 20 and the suction generating unit 30. The filter anti-leaking-mounting structure includes an anti-leaking-mounting protrusion block 2221 arranged on a side wall of the second filter assembly 222 of the dirt collection unit 20, and an anti-leaking-mounting lock 36 arranged on the suction generating unit 30. The filter anti-leaking-mounting structure may prevent the dirt collection unit 20 from being mounted on the suction generating unit 30 when the filter assembly 22 is not mounted in the dirt collection unit 20. A side wall of one end of the body shell 31 of the suction generating unit 30 close to the dirt collection unit 20 partially protrudes outward to define a lock mounting seat 315. An anti-leaking-mounting lock 36 is pivotally connected with the lock mounting seat 315. A torsion spring is sleeved on the anti-leaking-mounting lock 36. The anti-leaking-mounting lock 36 is provided with at least three lock portions extending outward in a circumferential direction, namely a first lock portion 361, a second lock portion 362, and a third lock portion 363. The first lock portion 361, the second lock portion 362, and the third lock portion 363 are bent components. A bending direction of the first lock portion is opposite to a bending direction of the second lock portion 362 and the third lock portion 363. When the first lock portion is not mounted with the dirt collection unit 20, the first lock portion 361 abuts against an edge of the lock mounting seat 315 under an action of the torsion spring.

When the dirt collection unit 20 are mounted and connected with the suction generating unit 30, and the filter assembly 22 is not mounted in the dirt collection unit 20, the first lock portion 361 will block between a step of a lock accommodating groove 25 of the dirt cup 21 of the dirt collection unit 20 and an end edge of the lock mounting seat 315 of the body shell 31, in this way, the locking protrusion block 314 on the body shell 31 can not be inserted into the bottom end of the vertical groove section of the locking groove 213 of the dirt cup 21 and not be rotated into the horizontal groove section of the locking groove 213, and the dirt collection unit 20 and the suction generating unit 30 may not be locked and mounted. When the filter assembly 22 is mounted in the dirt collection unit 20 and the dirt collection unit 20 and the suction generating unit 30 are close to each other, the anti-leaking-mounting protrusion block 2221 arranged on the side wall of the second filter assembly 222 of the dirt collection unit 20 will act on the second lock portion 362 to rotate the anti-leaking-mounting lock 36. The first lock portion 361 is away from the end edge of the lock mounting seat 315, so that the locking protrusion block 314 on the body shell 31 can be normally inserted into the bottom end of the vertical groove section of the locking groove 213 of the dirt cup 21 and be rotated and screwed into the horizontal groove section of the locking groove 213 to realize a locking of the dirt collection unit 20 and the suction generating unit 30. After the dirt collection unit 20 and the suction generating unit 30 are mounted, the anti-leaking-mounting protrusion block 2221 is located between the second lock portion 362 and the third lock portion 363, and the anti-leaking-mounting protrusion block 2221 abuts against the third lock portion 363, so the anti-leaking-mounting protrusion block 2221 gives a force away from the suction generating unit 30 to the dirt collection unit 20 to prevent the dirt collection unit 20 and the suction generating unit 30 from loosening.

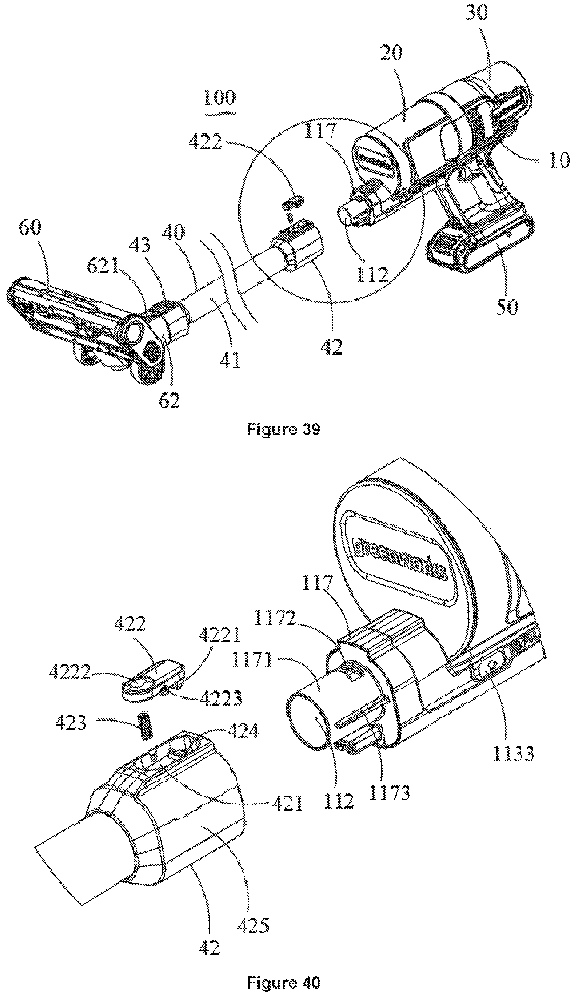

Please refer to FIG. 39 through FIG. 41, the air tube unit 40 and the air inlet channel 112 are connected by a first connector. The first connector includes a first male connector 117 arranged at the first air inlet 1121 of the air inlet channel 112, and a first female connector 42 arranged at an end of the air tube 41 of the air tube unit 40 close to the air inlet channel 112. The first male connector 117 is a male connector with a first connector coupling portion 1171, and the first female connector 42 is a female connector with a first connector receiving portion 425. The first male connector 117 and the first female connector 42 are connected with each other, so that the air tube 41 of the handheld vacuum cleaner 100 may be communicated with the air inlet channel 112. It should be understood that, in other embodiments, the first male connector 117 may also be arranged on the air tube 41 of the air tube unit 40, and the first female connector is arranged on the air inlet channel 112, which means that the first male connector 117 is arranged at one of the two connecting ends of the air inlet channel 112 and the air tube 41, and the first female connector 42 is arranged at the other one of the two connecting ends of the air inlet channel 112 and the air tube 41.

Please refer to FIG. 39 through FIG. 41. In this embodiment, the first male connector 117 is a male connector with the first connector coupling portion 1171, which is arranged at the first air inlet 1121 of the air inlet channel 112. The first connector coupling portion 1171 of the first male connector 117 serves as a part of the air inlet channel 112. The first connector coupling portion 1171 is in a hollow cylindrical tube shape. A first locking groove 1172 is opened on a root (an end close to a dirt collector) of the side wall of the first connector coupling portion 1171.

Please refer to FIG. 39 through FIG. 41. In this embodiment, the first female connector 42 is a female connector with a first connector receiving portion 425, which is arranged at an end of the air tube 41 of the air tube unit 40 close to the air inlet channel 112. The first connector receiving portion 425 is in a cylindrical structure, and an end of the first connector receiving portion 425 close to the male connector is provided inwardly with a coupling hole (not shown) for the first connector coupling portion 1171 to be inserted. The first female connector 42 includes the first connector receiving portion 425, a first button mounting groove 421, a first disassembly button 422, a fifth elastic component 423, and a first button through hole 424, which are all arranged on an outer side wall of the first connector receiving portion 425. The first button mounting groove 421 is arranged on the outer side wall of the first connector receiving portion 425 corresponding to the first locking groove 1172. The first bottom through hole 424 is arranged at a bottom of one end of the first button mounting groove 421 close to the dirt collection unit 20 and corresponds to a position of the first locking groove 1172. The first bottom through hole 424 penetrates an insertion groove of the first connector receiving portion 425. The first disassembly button 422 includes a first button shaft 4223, and a first button buckle portion 4221 and a first button pressing portion 4222 arranged at both ends of the first button shaft 4223. The first button shaft 4223 is located in a middle of the first disassembly button 422. The first disassembly button 422 is pivotally mounted in the first button mounting groove 421 through the first button shaft 4223. The first button buckle portion 4221 corresponds to a position of the first bottom through hole 424 and the first locking groove 1172. The fifth elastic component 423 is located between the first button pressing portion 4222 and the first button mounting groove 421. When the first male connector is connected with the first female connector, the first button buckle portion is clamped and locked into the first locking groove to realize locking.

Please refer to FIG. 39 through FIG. 41. In this embodiment, a first fool-proofing structure 1173 is also arranged on the outer wall of the first connector coupling portion 1171 of the first male connector 117 to restrict a joint direction of the first male connector 117 and the first female connector 42. As an example, the first fool-proofing structure 1173 may be, for example, an elongated protrusion block arranged on the outer wall of the first connector coupling portion 1171 and arranged along a length direction of the first connector coupling portion 1171.

When the air tube unit 40 is connected with the air inlet channel 112, the first connector coupling portion 1171 of the first male connector 117 is inserted into a coupling part insertion groove of the first connector receiving portion 425 of the first female connector 42. The first button buckle portion 4221 of the first female connector 42 passes through the first bottom through hole 424 under an action of the fifth elastic component 423, and then is clamped and matched in the first locking groove 1172 of the first male connector 117, which realizes that the air tube unit 40 and the air inlet channel 112 are tightly combined and locked for fluid communication. When it is necessary to separate the air tube unit 40 from the air inlet channel 112, as long as the first button pressing portion 4222 of the first disassembly button 422 is pressed, the first button buckle portion 4221 is separated from the first locking groove 1172 of the first male connector 117, and the air tube unit 40 may be separated from the air inlet channel 112.

Please refer to FIG. 39, the air tube unit 40 and the brush assembly 60 or other vacuum cleaner accessories such as mite removal brush, flat suction, square brush, dual-purpose brush, etc. may also be connected by a second connector similar with the first connector mentioned above. The second connector includes a second male connector 43 and a second port 621. The second male connector 43 is arranged at one of two connecting ends of the brush assembly 60 and the air tube 41, and the second port 621 is arranged at the other one of the two connecting ends of the brush assembly 60 and the air tube 41. The second male connector 43 is similar in structure to the first male connector 117. A side wall of a second connector coupling portion of the second male connector 43 is provided with a second locking groove. The second connector receiving portion of the second port 621 is provided with a second disassembly button with a second button buckle portion. When the second male connector 43 is connected with the second port 621, the second button buckle portion is clamped and locked into the second locking groove to realize locking. In a specific embodiment, the second port 621 is arranged on an air tube connection portion 62 of the brush assembly 60, and the second male connector 43 is arranged on an end of the air tube 41 close to the brush assembly 60.

In summary, the handheld vacuum cleaner of the disclosure is provided with a display screen at a back of the body shell, facing the person. The display screen displays the relevant parameters of the handheld vacuum cleaner, and a power adjustment of the handheld vacuum cleaner may be realized through the touch screen, and the operation is more intuitive and more user-friendly. The handheld vacuum cleaner of disclosure adopts dirt-air separation technology, and utilizes cyclone generated by airflow into the dirt cup to rotate large particles and dirt along an inner wall of the dirt cup to the bottom of the dirt cup. Then a high-density filter is configured to separate dirt that is visible to eyes, and a high-specification filter paper is used on an inside to block nano-level dirt in the dirt cup, which discharges cleaned air into surrounding to realize an entire cleaning process. The handheld vacuum cleaner of the disclosure has reasonable structure layout and fixing method, convenient and quick operation, and may further reduce noise. With the connector structure of the handheld vacuum cleaner of the disclosure, the user may realize a quick disassembly and assembly under different working conditions, and quick interchange functions among various functional brushes, so as to achieve a purpose of cleaning. The connector structure of the handheld vacuum cleaner of the disclosure is provided with an anti-leaking-mounting structure between the suction generating unit and the dirt collection unit, which may avoid damage to the handheld vacuum cleaner due to a leaking mounting of the filter.

In an embodiment, in order to improve a condition that an upright locking structure in the conventional art will generate wear and cause a structure to easily fail and very harsh friction noise, the brush assembly 60 is also provided with an upright locking structure. The upright locking structure adopts a principle of magnetic attraction, so that when the air tube connection portion 62 is in an upright position, the air tube connection portion 62 is locked by an action of a magnetic force.

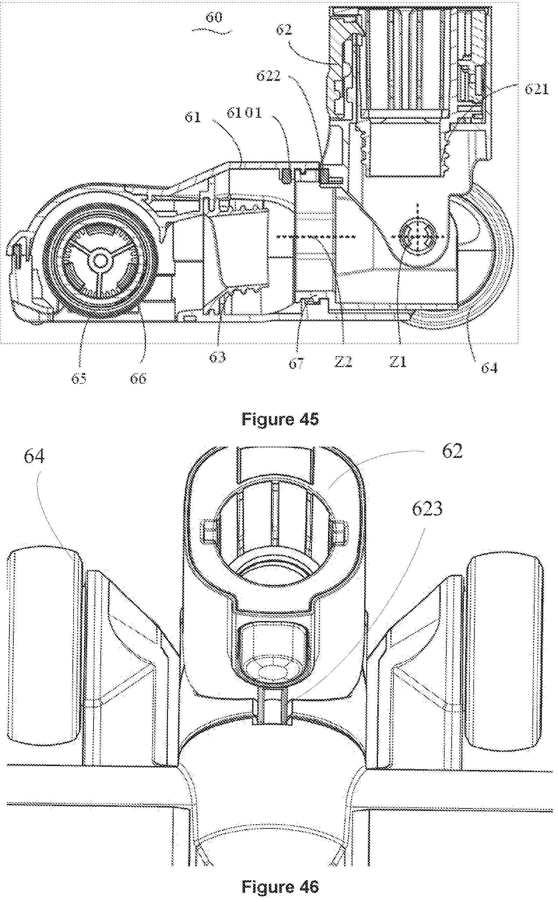

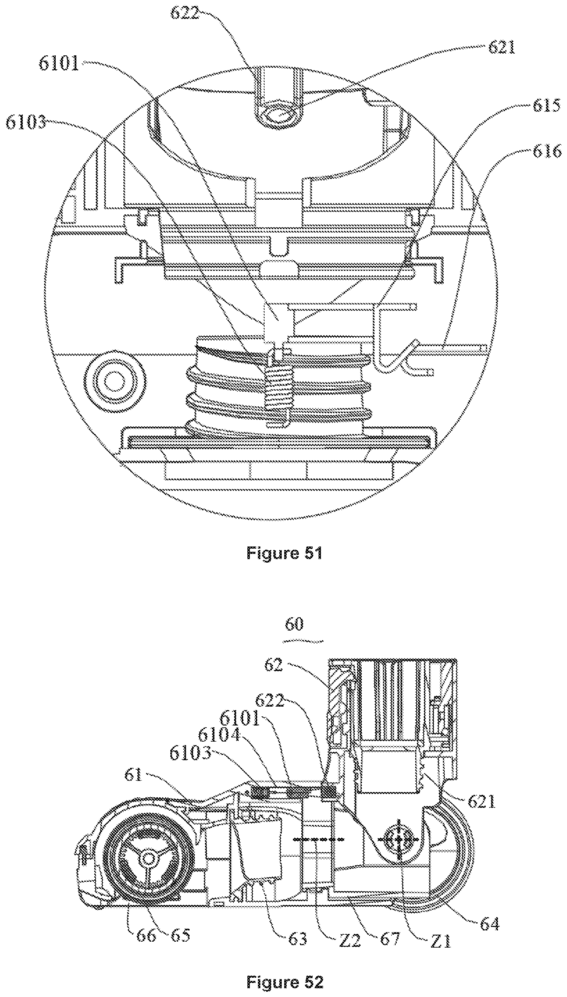

Please refer to FIG. 1, FIG. 42 through FIG. 53, the upright locking structure includes a first magnetic component 6101 arranged on the brush housing 61 and a second magnetic component 622 arranged on the air tube connection portion 62, and a position of the second magnetic component 622 corresponds to a position of the first magnetic component 6101. For example, one of the first magnetic component 6101 and the second magnetic component 622 may be a magnetic component, and the other one thereof may be a magnetic component or a component that is easily attracted by the magnetic component. The magnetic component may be, for example, a magnet, and the component that is easily attracted by the magnetic component may be, for example, a metal piece. When the air tube connection portion 62 rotates around a first axis Z1 to an upright position, a magnetic force is generated between the first magnetic component 6101 and the second magnetic component 622 to lock the brush housing 61 and the air tube connection portion 62. When the air tube connection portion 62 rotates around the first axis Z1 to a use position, the second magnetic component 622 on the air tube connection portion 62 is away from the first magnetic component 6101 arranged on the brush housing 61 and the magnetic force is reduced, which does not affect a normal use of the brush assembly 60.

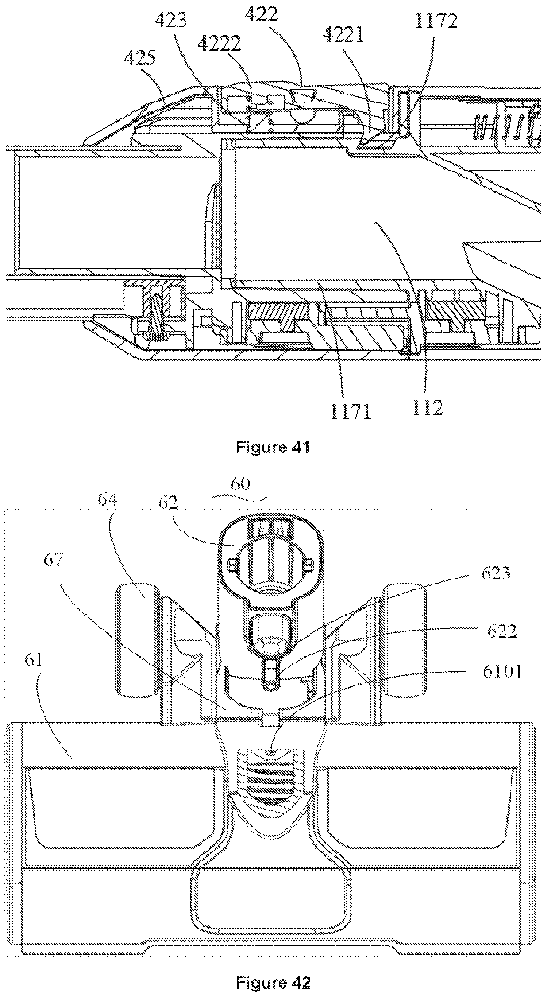

Please refer to FIG. 42 through FIG. 46. In an embodiment of the disclosure, the brush assembly 60 includes the brush housing 61, the agitator brush 65, the air tube connection portion 62 (which serves as an air tube connecting portion connected with an air tube), a second rotation connector 67, an upright locking structure and the traveling portion 64. The brush housing 61 has the accommodating cavity at the front end of the brush housing 61. The agitator brush 65 is rotatably mounted in the accommodating cavity and exposed from the bottom opening 66 at a bottom of the brush housing 61. The traveling portion 64 may be, for example, a traveling wheel, which is mounted on a bottom of a rear end of the brush housing 61. The rear end of the brush housing 61 is rotatably connected with the second rotation connector 67, and these two may rotate around a second axis Z2. One end of the air tube connection portion 62 is rotatably connected with an end of the second rotation connector 67 away from the brush housing 61. A rotation shaft between the air tube connection portion 62 and the second rotation connector 67 is defined as the first axis Z1, and the first axis Z1 is perpendicular to the second axis Z2. A switch between the upright position and the use position is realized by rotating the air tube connection portion 62 around the first axis Z1 in forward and backward directions. The second rotation connector 67 may rotate around the second axis Z2 in a left-right direction. In this embodiment, the first axis Z1 is parallel to a direction of a rotation axis of the traveling portion 64. The second axis Z2 is perpendicular to the first axis Z1, and the second axis Z2 is parallel to the ground.

Please refer to FIG. 42 through FIG. 46. In this embodiment, the upright locking structure includes the first magnetic component 6101 arranged on the brush housing 61 and a second magnetic component 622 arranged on the air tube connection portion 62, and the position of the second magnetic component 622 corresponds to the position of the first magnetic component 6101. The first magnetic component 6101 adopts a magnetic component, such as a magnet, etc. The second magnetic component 622 adopts a component that is easily attracted by the magnetic component, such as a metal piece. The first magnetic component 6101 is arranged on or above the first axis Z1. The first magnetic component 6101 is arranged on a top of the brush housing 61 near one end facing the air tube connection portion 62. When the air tube connection portion 62 rotates around the first axis Z1 to the upright position, a magnetic force is generated between the first magnetic component 6101 and the second magnetic component 622 to lock the brush housing 61 and the air tube connection portion 62. When the air tube connection portion 62 rotates around the first axis Z1 to a use position, the second magnetic component 622 on the air tube connection portion 62 is away from the first magnetic component 6101 arranged on the brush housing 61 and the magnetic force is reduced, which does not affect a normal use of the brush assembly 60.

It should be understood that, in one embodiment, both the first magnetic component 6101 and the second magnetic component 622 may adopt magnetic components such as magnets. In another embodiment, the first magnetic component may be a component that is easily attracted by the magnetic component, such as a metal piece, and the second magnetic component may be a magnetic component such as a magnet.

Please refer to FIG. 42 through FIG. 46. In this embodiment, a limiting rib 623 is arranged on a side of the air tube connection portion 62 facing the brush housing 61, and the second magnetic component 622 is arranged on the limiting rib 623. The brush housing 61 is provided with a first limiting groove 6102 corresponding to a position of the limiting rib 623. The first magnetic component 6101 is located on a side of the first limiting groove 6102 away from the limiting rib 623. The first magnetic component 6101 and the first limiting groove 6102 are spaced in intervals. The second rotation connector 67 is provided with a second limiting groove 671 communicating with the first limiting groove 6102.

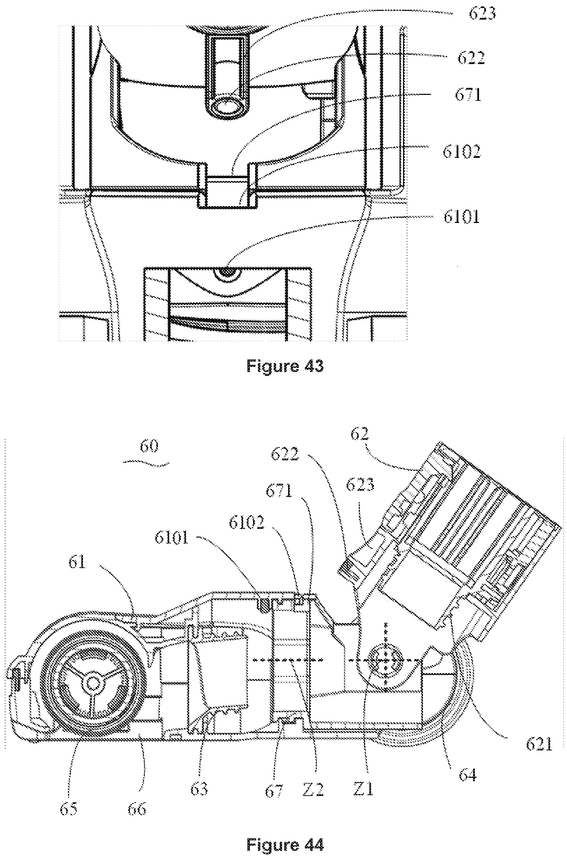

During use, as shown in FIG. 44 through FIG. 46, when the air tube connection portion 62 is rotated to an upright state, the limiting rib 623 on the air tube connection portion 62 enters the second limiting groove 671 of the second rotation connector 67, and then the limiting rib 623 and the second limiting groove 671 are clamped into the first limiting groove 6102 on the brush housing 61 together to limit a left-right rotation of the air tube connection portion 62 and the second rotation connector 67. Secondly, when the second magnetic component 622 approaches the first magnetic component 6101 on an upper cover of the brush housing 61, a magnetic attraction force is generated to restrict a free rotation of the air tube connection portion 62 in the forward and backward directions, so as to lock the rotation connector 62. As shown in FIG. 42 and FIG. 43, when the air tube connection portion 62 rotates to the use position in an opposite direction around the first axis Z1, the limiting ribs 623 on the air tube connection portion 62 are sequentially removed out from the first limiting groove 6102 and the second limiting groove 671, thereby the second magnetic component 622 is kept away from the first magnetic component 6101 on the brush housing 61, which reduces the magnetic force and does not affect the normal use of the brush assembly 60.

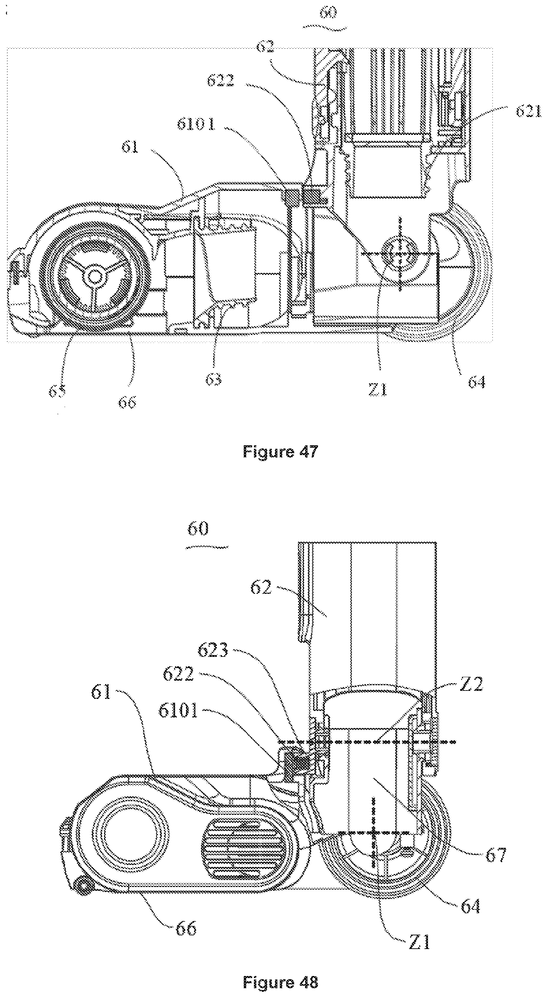

Please refer to FIG. 47. In an embodiment of the disclosure, the handheld vacuum cleaner of the disclosure removes the second rotation connector 67, and the air tube connection portion 62 is directly fixed to a rear end of the brush housing 61 of the brush assembly 60 and may rotate around the first axis Z1 in the front-rear direction. The brush 60 assembly includes the brush housing 61, the agitator brush 65, the air tube connection portion 62 (which serves as an air tube connection portion connected with air tube), a second rotation connector 67, the upright locking structure and the traveling portion 64. The brush housing 61 is provided with an accommodating cavity at the front end of the brush housing 61. The agitator brush 65 is rotatably mounted in the accommodating cavity and exposed from a bottom opening 66 at the bottom of the brush housing 61. The traveling portion 64 may be, for example, a traveling wheel, which is mounted on the bottom of the rear end of the brush housing 61. The rear end of the brush housing 61 is rotatably connected with the air tube connection portion 62, and these two may rotate around the first axis Z1. The air tube connection portion 62 rotates in the forward and backward directions around the first axis Z1 to switch to the upright position or the use position. In this embodiment, the first axis Z1 is parallel to the direction of the rotation axis of the traveling portion 64.

Please refer to FIG. 47, in this embodiment, the upright locking structure includes the first magnetic component 6101 arranged on the brush housing 61 and the second magnetic component 622 arranged on the air tube connection portion 62, and the positions of the second magnetic component 622 and the first magnetic component 6101 correspond to each other. The first magnetic component 6101 is arranged on or above the first axis Z1. For example, one of the first magnetic component 6101 and the second magnetic component 622 may be a magnetic component, and the other one is a magnetic component or a component that is easily attracted by the magnetic component. The first magnetic component 6101 is arranged on the top of the brush housing 61 near one end facing the air tube connection portion 62. When the air tube connection portion 62 rotates around the first axis Z1 to an upright position, a magnetic force is generated between the first magnetic component 6101 and the second magnetic component 622 to lock the brush housing 61 and the air tube connection portion 62. When the air tube connection portion 62 rotates around the first axis Z1 to a use position, the second magnetic component 622 on the air tube connection portion 62 is away from the first magnetic component 6101 arranged on the brush housing 61 and the magnetic force is reduced, which does not affect a normal use of the brush assembly 60.

Please refer to FIG. 1, FIG. 42 through FIG. 46, in this embodiment, the limiting rib 623 is arranged on the side of the air tube connection portion 62 facing the brush housing 61, and the second magnetic component 622 is arranged on the limiting rib 623. The brush housing 61 is provided with the first limiting groove 6102 corresponding to the position of the limiting rib 623. The first magnetic component 6101 is located on the side of the first limiting groove 6102 away from the limiting rib 623. The first magnetic component 6101 and the first limiting groove 6102 are spaced in intervals.

During use, when the air tube connection portion 62 is rotated to the upright state, the limiting rib 623 on the air tube connection portion 62 is clamped into the first limiting groove 6102 on the brush housing 61. When the second magnetic component 622 approaches the first magnetic component 6101 on the upper cover of the brush housing 61, a magnetic attraction force is generated to restrict the free rotation of the rotation connector in the forward and backward directions, thereby achieving an effect of locking the rotation connector. When the air tube connection portion 62 rotates to the use position in the opposite direction of the first axis Z1, the limiting rib 623 on the air tube connection portion 62 is removed from the first limiting groove 6102, thereby the second magnetic component 622 is moved away from the first magnetic component 6101 on the brush housing 61, which weakens the magnetic force, and does not affect the normal use of the brush assembly 60.

Please refer to FIG. 48, in an embodiment of the disclosure, the second rotation connector 67 rotates around the first axis Z1 in the forward and backward direction, and the air tube connection portion 62 rotates around the second axis Z2 in the left-right direction. The brush assembly 60 includes the brush housing 61, the agitator brush 65, the air tube connection portion 62 (which serves as an air tube connecting portion connected with an air tube), the second rotation connector 67, the upright locking structure and the traveling portion 64. The brush housing 61 is provided with an accommodating cavity at the front end of the brush housing 61. The agitator brush 65 is rotatably mounted in the accommodating cavity and exposed from the bottom opening 66 at the bottom of the brush housing 61. The traveling portion 64 may be, for example, a traveling wheel, which is mounted on the bottom of the rear end of the brush housing 61. The second rotation connector 67 is rotatably connected with an end of the brush housing 61 close to the air tube connection portion 62. A rotation axis of the second rotation connector 67 and the brush housing 61 is defined as the first axis Z1, which means that the rotation axis of the second rotation connector 67 and the brush housing 61 and the first axis Z1 are collinear. The air tube connection portion 62 is rotatably connected with an end of the second rotation connector 67 away from the first axis Z1. The rotation axis between a rotation direction of the air tube connection portion 62 and the second rotation connector 67 is defined as the second axis Z2. The switch between the upright position and the use position is realized by a simultaneous rotation of the air tube connection portion 62 and the second rotation connector 67 around the first axis Z1 in the forward and backward directions. The air tube connection portion 62 may rotate around the second axis Z2 in the left-right direction. In this embodiment, the first axis Z1 is parallel to a direction of the rotation axis of the traveling portion 64, the second axis Z2 is perpendicular to the first axis Z1, and the second axis Z2 is substantially parallel to the ground when it is upright.

Please refer to FIG. 48, in this embodiment, the upright locking structure includes the first magnetic component 6101 arranged on the brush housing 61 and the second magnetic component 622 arranged on the air tube connection portion 62, and the positions of the second magnetic component 622 and the first magnetic component 6101 correspond to each other. The first magnetic component 6101 is arranged on or above the first axis Z1. For example, one of the first magnetic component 6101 and the second magnetic component 622 may be a magnetic component, and the other one is a magnetic component or a component that is easily attracted by the magnetic component. The first magnetic component 6101 is arranged on the top of the brush housing 61 near one end facing the air tube connection portion 62. When the air tube connection portion 62 rotates around the first axis Z1 to an upright position, a magnetic force is generated between the first magnetic component 6101 and the second magnetic component 622 to lock the brush housing 61 and the air tube connection portion 62. When the air tube connection portion 62 rotates around the first axis Z1 to a use position, the second magnetic component 622 on the air tube connection portion 62 is away from the first magnetic component 6101 arranged on the brush housing 61 and the magnetic force is reduced, which does not affect a normal use of the brush assembly 60.

Please refer to FIG. 48. In this embodiment, a limiting rib 623 is arranged on the side of the air tube connection portion 62 facing the brush housing 61, and the second magnetic component 622 is arranged on the limiting rib 623. The brush housing 61 is provided with the first limiting groove 6102 corresponding to the position of the limiting rib 623. The first magnetic component 6101 is located on the side of the first limiting groove 6102 away from the limiting rib 623. The first magnetic component 6101 and the first limiting groove 6102 are spaced in intervals.

During use, when the air tube connection portion 62 is rotated to the upright state driven by the rotation connector 67, the limiting rib 623 on the air tube connection portion 62 is clamped into the first limiting groove 6102 on the brush housing 61. When the second magnetic component 622 approaches the first magnetic component 6101 on the upper cover of the brush housing 61, a magnetic attraction force is generated to restrict the free rotation of the rotation connector in the forward and backward directions, thereby achieving the effect of locking the rotation connector. When the air tube connection portion 62 is driven by the second rotation connector 67 to rotate in the opposite direction around the first axis Z1 to the use position, the limiting rib 623 on the air tube connection portion 62 is removed from the first limiting groove 6102, so that the second magnetic component 622 is kept away from the first magnetic component 6101 on the brush housing 61, which weakens the magnetic force and does not affect the normal use of the brush assembly 60.

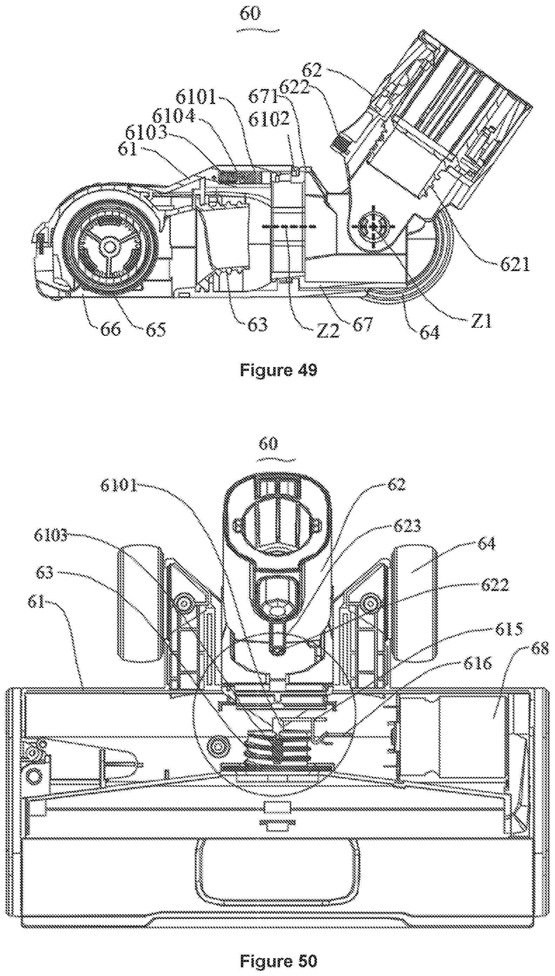

Please refer to FIG. 49 through FIG. 53, in an embodiment of the disclosure, the fixing manner of the first magnetic component 6101 on the brush housing 61 is changed to be movable within a certain range, and the first magnetic component 6101 is introduced into a power supply circuit of a second motor 68 to control on and off of the second motor 68. Other structures are basically the same as mentioned above, so details will not be repeated.

Please refer to FIG. 49 through FIG. 53, compared with the above embodiments, the brush assembly 60 further includes an elastic component 6103 and a sliding channel 6104 . The first magnetic component 6101 is fixed in the sliding channel 6104 of the brush housing 61 through the elastic component 6103. When the air tube connection portion 62 rotates to the upright position around the first axis Z1 (the first axis Z1 is parallel to the direction of the rotation axis of the traveling portion 64), a magnetic force is generated between the first magnetic component 6101 and the second magnetic component 622. The first magnetic component 6101 moves along the sliding channel 6104 toward the second magnetic component 622 to lock the brush housing 61 and the air tube connection portion 62.

Please refer to FIG. 49 through FIG. 53, the first magnetic component 6101 may be fixedly connected with a conductive first connecting component 615 as a switch contact of the power supply circuit of the second motor 68. A conductive second connecting component 616 is fixed on one side of the first connecting component 615, and the second connecting component 616 is also connected with the power supply circuit of the second motor 68. When the air tube connection portion 62 rotates around the first axis Z1 to the working position, the first magnetic component 6101 returns to an initial position under an action of the elastic component 6103, and the first connecting component 615 and the second connecting component 616 are in contact, so that the power supply circuit of the second motor 68 is truned on, and the second motor 68 may work normally. While when the air tube connection portion 62 rotates around the first axis Z1 to the upright position, a magnetic force is generated between the first magnetic component 6101 and the second magnetic component 622, the first magnetic component 6101 moves toward the second magnetic component 622 along the sliding channel 6104, and the first connecting component 615 and the second connecting component 616 are seperated, the power supply circuit of the second motor 68 is cut off, and the second motor 68 stops working, which may prevent the agitator brush 65 from abrading carpet or floor, and reduce a load state of the second motor 68.

It should be understood that the upright locking structure of this embodiment may also be applied to the structure of the brush assembly 60 of the above embodiments to realize a on and off of the power supply circuit of the second motor 68.

In summary, the upright locking structure of the brush assembly of the disclosure adopts the principle of magnetic attraction, so that when the air tube connection portion of the brush assembly is in the upright position, a magnetic force is generated to lock the air tube connection portion. The upright locking structure of the brush assembly of the disclosure has a simple structure, and there is no friction between the brush housing and the first magnetic component, so that a problem of structural failure and noise generation due to friction will not occur. The brush assembly connects the upright locking structure with the power supply circuit of the second motor, and changes a fixing method of the first magnetic component of the upright locking structure to be movable within a certain range, so that when the air tube connection portion is in an upright state, the second motor may stop running to prevent agitator brushes from abrading carpet or floor and reduce load of the second motor.

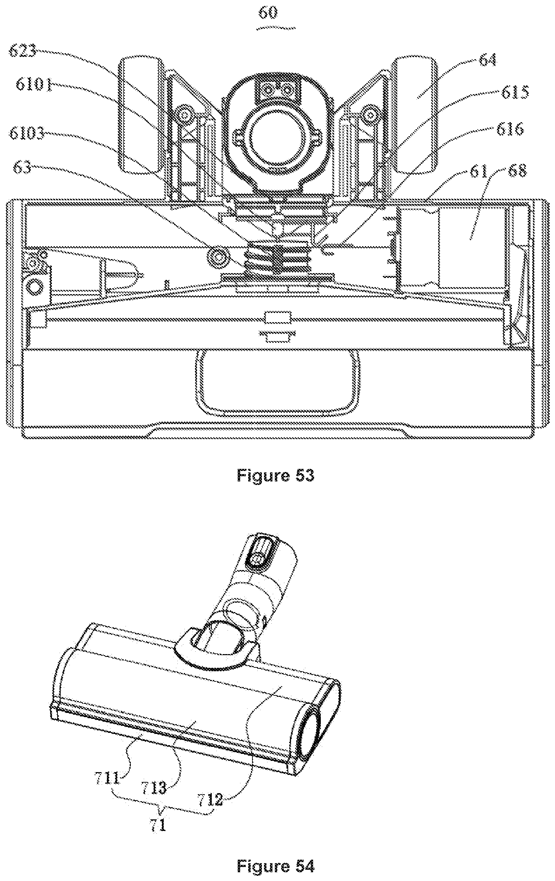

Please refer to FIG. 54 through FIG. 65, the disclosure further provides a vacuum cleaner brush assembly, which is not part of the present invention. The vacuum cleaner brush assembly includes a brush housing 71, a first supporting component 72, a second supporting component 73 and an agitator brush 74. A cylindrical mounting cavity 7111 is defined inside the brush housing 71. The first supporting component 72 is detachably connected with the brush housing 71 and defines a first end (not shown in the figure). The first end is located at one end of the mounting cavity 7111. The second supporting component 73 is fixedly connected with the brush housing 71 and defines a second end (not shown in the figure). The second end is located at the other end of the mounting cavity 7111. The agitator brush 74 is cylindrical and hollow, the first supporting component 72 and the second supporting component 73 are placed at both ends of a hollow portion of the agitator brush 74, and two ends of the agitator brush 74 are respectively, detachably and fixedly connected with the first supporting component 72 and the second supporting component 73. A power component 75 is fixed in the brush housing 71 and is connected with the agitator brush 74 in a transmission manner.

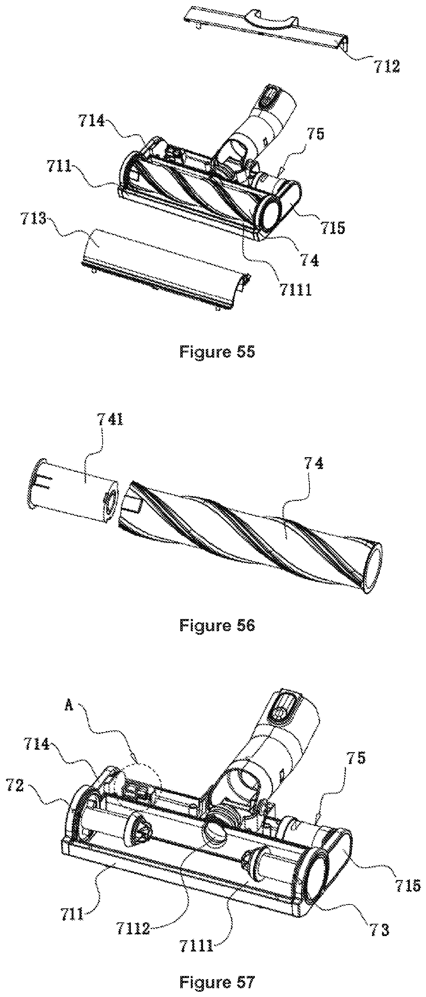

Please refer to FIG. 54 and FIG. 55. In this embodiment, the brush housing 71 includes a base 711, a brush upper cover 712, and a brush window 713. The brush window 713 is detachably mounted on the base 711, and the mounting cavity 7111 is defined between the base 711 and the brush window 713. Further, an opening is arranged at a position of a bottom wall of the base 711 corresponding to the agitator brush 74, and a part of the agitator brush 74 may extend outside the base 711 and contact the ground through the opening on the base 711. In addition, a cavity for mounting the power component 75 is further defined on the base 711. The brush upper cover 712 is fixed on the base 711 and closes a position of the base 711 corresponding to the power component 75. An opening 7112 is defined in the middle of the mounting cavity 7111 in the base 711, and the opening 7112 is communicated with the air channel in the vacuum cleaner through a hose.

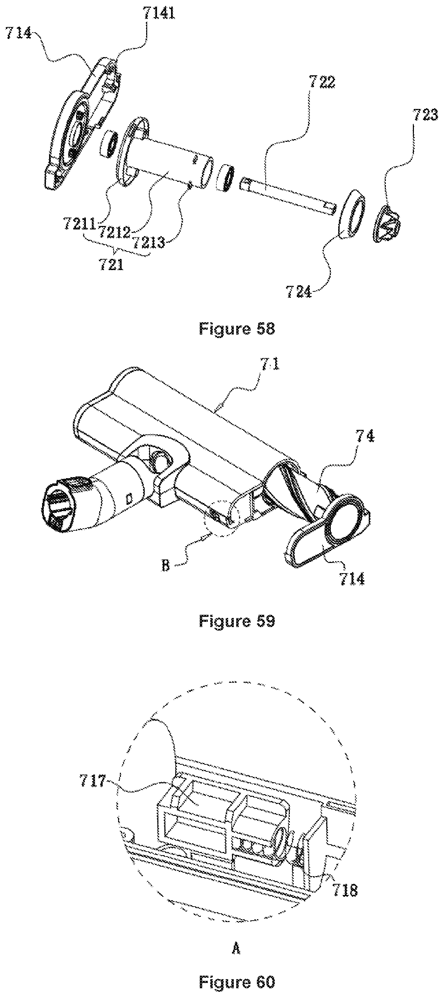

Please refer to FIG. 57 and FIG. 58, in this embodiment, the first supporting component 72 includes a fixing bracket 721, a first pin shaft 722 and a first limiting component 723. Wherein, an end of the fixing bracket 721 is detachably connected with the base 711 and is located at one end of the mounting cavity 7111. Part of fixing bracket 721 is placed inside the mounting cavity 7111. The first pin shaft 722 coaxially penetrates inside the fixing bracket 721, and both ends of the first pin shaft 722 are rotatably connected with the fixing bracket 721 through bearings. The first limiting component 723 is coaxially fixed with the first pin shaft 722 and is rotatably connected with the agitator brush 74.

Please refer to FIG. 57 and FIG. 58, in this embodiment, the fixing bracket 721 includes a fixing disc 7211, a first cylinder 7212 and a first blocking component. The fixing disc 7211 is detachably and fixedly connected with the base 711, and the first supporting component 72 may be drawn out of the agitator brush 74 along an axial direction of the agitator brush 74. One end of the first cylinder 7212 is coaxially fixed with the fixing disc 7211, and the other end thereof is placed inside the mounting cavity 7111. The first pin shaft 722 coaxially penetrates in the first cylinder 7212, and is rotatably connected with the first cylinder 7212 through a bearing. A way of a bearing connection may ensure a stability of a rotation of the first pin shaft 722. In this embodiment, the first blocking component is a block 7213. Here, a shape and structure of the first blocking component is not limited to a structure of the block 7213 in the figure, and it can be used as long as it can fix a first retaining ring 724. The block 7213 is fixed on an outer side wall of the first cylinder 7212 and is located at an end away from the fixing disc 7211. It should be noted that there are four blocks 7213, which are arranged around a circumference of the first cylinder 7212.

Please refer to FIG. 56, FIG. 57 and FIG. 58. A first retaining ring 724 is coaxially sleeved on the first cylinder 7212. The first retaining ring 724 is located between the block 7213 and the first limiting component 723, and both sides of the first retaining ring 724 respectively abut against the block 7213 and the first limiting component 723 tightly. It should be noted that the first retaining ring 724 is made of a wear-resistant flexible material, and is in a certain interference fit with an inner side wall of the brake ring 741 and is relatively frictional. The brake ring 741 is coaxially fixed inside an end where the agitator brush 74 is connected with the first supporting component 72, and one end of the brake ring 741 extending into the mounting cavity 7111 meshes and is fixed with the first limiting component 723, so as to realize a transmission connection between the agitator brush 74 and the first pin shaft 722.

Please refer to FIG. 59, FIG. 60 and FIG. 61. In this embodiment, the brush housing 71 further includes a first end cover 714. The first end cover 714 is fixedly connected with the fixing disc 7211 by bolts. In addition, a mounting groove 716 is opened on the base 711 near the first supporting component 72, a button 717 is slidably connected in the mounting groove 716, and a part of the button 717 is clamped and matched with the first end cover 714. The button 717 may be separated from the first end cover 714 by turning the button 717, so that the agitator brush 74 may be drawn out from the mounting cavity, and hair inside the agitator brush 74 may be easily cleaned. Further, a clamping groove 7141 is arranged on an inner side wall of the first end cover 714. A clamping block 7171 is defined at one end of the button 717, and a connection or disassembly between the first end cover 714 and the base 717 is realized through an insertion and matching between the clamping block 7171 and the clamping groove 7141. A spring 718 is fixed between the button 717 and the base 711, and an automatic reset of the button 717 is realized by the spring 718.

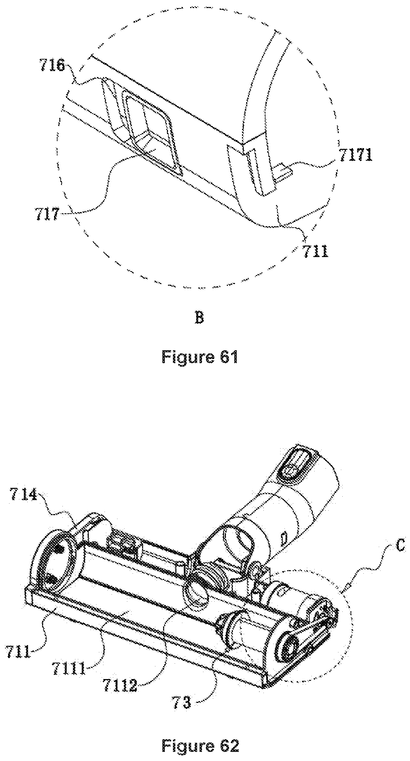

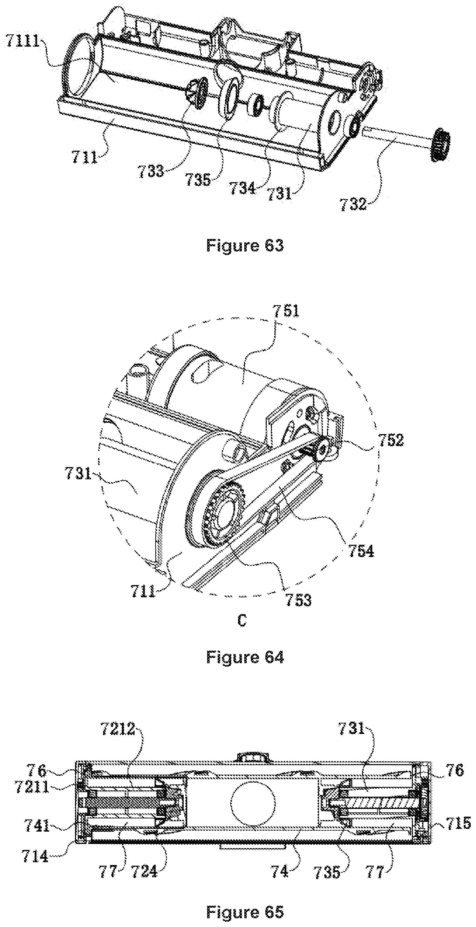

Please refer to FIG. 62 and FIG. 63, in this embodiment, the second supporting component 73 includes a second cylinder 731, a second pin shaft 732 and a second limiting component 733. Wherein, one end of the second cylinder 731 is fixedly connected with an inner side wall of the base 711, and the other end thereof is located inside the mounting cavity 7111. The second pin shaft 732 coaxially penetrates in the second cylinder 731, and is rotatably connected with the second cylinder 731 through a bearing. The way of the bearing connection may ensure the stability of a rotation of the second pin shaft 732. It should be noted that one end of the second pin shaft 732 located in the mounting cavity 7111 is coaxially fixed with the second limiting component 733, the second limiting component 733 is internally connected with the agitator brush 74, and the other end of the second pin shaft 732 is connected with the power component 75 in a transmission manner through a gear. In addition, a second blocking component is fixed on an outer side wall of the second cylinder 731. It should be noted that in this embodiment, the second blocking component is a blocking board 734, a shape and structure of the second blocking component are not limited to a structure of the blocking board 734 in the figure, and it can be used as long as it can fix a second retaining ring 735. The blocking board 734 is vertically arranged as a circular plate around the outer side wall of the second cylinder 731, and the blocking board 734 is located on the second cylinder 731 close to the second limiting component 733.

Please refer to FIG. 62 and FIG. 63, the second retaining ring 735 is coaxially sleeved on the second cylinder 731. The second retaining ring 735 is located between the blocking board 734 and the second limiting component 733, and both sides of the second retaining ring 735 respectively abut against the blocking board 734 and the second limiting component 733 tightly. It should be noted that the second retaining ring 734 is made of a wear-resistant flexible material. The second retaining ring 734 is in a certain interference fit with an inner wall of the agitator brush 74, and is relatively frictional. An inside of the end of the agitator brush 74 connected with the second supporting member 73 meshes and is fixed with the second limiting component 733, so as to realize a transmission connection between the agitator brush 74 and the second pin shaft 732.

Please refer to FIG. 65. In the disclosure, guiding gaps 76 are defined between the two ends of the agitator brush 74 and inner walls of the fixing disc 7211 and the base 711, respectively. Receiving grooves 77 are defined between inner side walls at both ends of the agitator brush 74 and outer side walls of the first supporting component 72 and the second supporting component 73, and the receiving groove 77 communicates with the guiding gap 76. Wherein, the receiving groove 77 of the first supporting component 72 is defined between the brake ring 741 and the first cylinder 7212, and the receiving groove 77 of the second supporting component 73 is defined between the agitator brush 74 and the second cylinder 731. Tangled hair on the both ends of the agitator brush 74 may be placed in the receiving groove 77 defined inside the agitator brush 74 through the guiding gap 76, which may reduce conditions of an accumulation of excessive hair at the both ends of the agitator brush 74 to form a friction medium, so as to avoid partial deformation and melting of the fixing disc 7211 or an inner wall of the base 711 caused by heat generated by a friction between a high-speed rotating agitator brush 74 and the friction medium, thereby avoiding an occurrence of jamming of the agitator brush 74.

Please refer to FIG. 65. In the disclosure, the first retaining ring 724 and the second retaining ring 735 are configured to seal a side of the receiving groove 77 defined inside the agitator brush 74 away from the guiding gap 76, so as to prevent the hair in the receiving groove 77 from being caught in a meshing and fixing position between the first limiting component 723 and the brake ring 741 or a meshing and fixing position between the second limiting component 733 and the agitator brush 74. In addition, since the first retaining ring 724 and the second retaining ring 735 are respectively in interference fit with an inner side wall of the brake ring 741 and an inner side wall of the agitator brush 74, when the power component 75 stops working, the first retaining ring 724 and the second retaining ring 735 may act as a brake, so that the agitator brush 74 may be quickly stopped.

Please refer to FIG. 62 and FIG. 64, in this embodiment, the power component 75 includes a second motor 751, a driving gear 752, a driven gear 753, and a toothed belt 754. The second motor 751 is fixed on the base 711 and is located close to the second supporting component 73. An output shaft of the second motor 751 passes through a side wall of the base 711 and is partially located outside the base 711. The driving gear 752 is coaxially fixed with the output shaft of the second motor 751. The driven gear 753 is coaxially fixed with an end of the second pin shaft 732 away from the second limiting component 733, and the driven gear 753 is located on an outside of the base 711. The toothed belt 754 surrounds the driving gear 752 and the driven gear 753 in sequence, and meshes with the driving gear 752 and the driven gear 753.

Please refer to FIG. 55 and FIG. 65. In this embodiment, the brush housing 71 further includes a second end cover 715. The second end cover 715 is fixed on the base 711 and is located at a position of the second supporting component 73 on the base 711. The second end cover 715 encapsulates the driving gear 752 and the driven gear 753 between the second end cover 715 and an outer side wall of the base 711, which may provide a certain protective effect on the driving gear 752, the driven gear 753 and the toothed belt 754.

In summary, inner side walls of the two ends of the agitator brush 74 defines a receiving groove 77 with the outer side walls of the first supporting component 72 and the second supporting component 73, and the receiving groove 77 is connected with the guiding gap 76, so that the tangled hair on the both ends of the agitator brush 74 may be placed in the receiving groove 77 defined inside the agitator brush 74 through the guiding gap 76, which may reduce conditions of an accumulation of excessive hair at the both ends of the agitator brush 74 to form a friction medium, thereby avoiding an occurrence of jamming of the agitator brush 74 due to hair.

In the description herein, many specific details are provided, such as examples of components and/or methods, to provide a complete understanding of the embodiments of the disclosure. However, those skilled in the art will recognize that the embodiments of the disclosure may be realized without one or more specific details or through other devices, systems, assemblies, methods, components, materials, parts, etc. In other cases, well-known structures, materials, or operations are not specifically shown or described in detail to avoid obscuring aspects of the embodiments of the disclosure.

It should also be understood that one or more of the components shown in the drawings may also be implemented in a more separate or integrated manner, or may even be removed because it cannot be operated in some cases or may be provided because it is useful according to a particular application.

In addition, unless expressly indicated otherwise, any marking arrows in the drawings should be regarded only as exemplary instead of limiting. What's more, unless specified otherwise, the term "or" as used herein generally means "and/or." In cases where the term is foreseen because it is unclear to provide separation or combination capabilities, the combination of components or operations will also be regarded as specified.

## Claims

1. A handheld vacuum cleaner (100), comprising:
a housing (10), comprising a body (11), a holding portion (12) and a base (13), the holding portion (12) being arranged between the body (11) and the base (13), the body (11) comprising an accommodating groove (111) and an air inlet channel (112),
a suction generating unit (30), at least partially housed in the accommodating groove (111) and configured to generate airflow along the air inlet channel (112),
a dirt collection unit (20), at least partially housed in the accommodating groove (111), detachably mounted on the suction generating unit (30) and configured to separate dirt and dust from the airflow, and
a battery pack (50), mounted on the base (13) and configured to supply power to the suction generating unit (30), **characterized in that**
the holding portion (12) is at least partially covered with a static conducting portion (125), and the static conducting portion (125) is electrically connected with a static generating portion of the handheld vacuum cleaner (100) and **in that** the holding portion (12) includes a handle (123) and a supporting bracket (124), and a buckle portion is defined by the handle (123), the supporting bracket (124), the body (11) and the base (13) collectively, the static conducting portion (125) is S-shaped as a whole and includes a first covering portion (1251) covering a part of a surface of the handle (123) and a second covering portion (1252) covering a side of the buckle portion close to the body (11), the first covering portion (1251) and the second covering portion (1252) are connected with each other.

2. The handheld vacuum cleaner (100) according to claim 1, wherein
the static conducting portion (125) is a conductive non-metallic material with a resistivity in a range between 10⁷Ω and 10¹²Ω.

3. The handheld vacuum cleaner (100) according to claim 1 or 2, wherein
an end of the first covering portion (1251) close to the base (13) is located on a side of the handle (123) away from the supporting bracket (124), and an end of the first covering portion (1251) close to the body (11) is located on a side of the handle (123) close to the supporting bracket (124).

4. The handheld vacuum cleaner (100) according to claim 1, wherein
the air inlet channel (112) is arranged on the body (11), and the dirt collection unit (20) comprises a dirt cup (21) and a first dirt suction inlet (212) located on a side wall of the dirt cup (21), the first dirt suction inlet (212) matches an air outlet (1122) of the air inlet channel (112), the handheld vacuum cleaner (100) further comprises a brush assembly (60) and an air tube unit (40), the brush assembly (60) is provided with a second dirt suction inlet (63), the air tube unit (40) comprises an air tube (41), wherein, the second dirt suction inlet (63) of the brush assembly (60) communicates with an air inlet (1121) of the air inlet channel (112) of the housing (10) through the air tube (41), an opening area of the first dirt suction inlet (212) is smaller than a cross-sectional area of an inner hole of the air tube (41), and an opening area of the second dirt suction inlet (63) is smaller than the cross-sectional area of the inner hole of the air tube (41).

5. The handheld vacuum cleaner (100) according to claim 4, wherein
a ratio of the opening area of the first dirt suction inlet (212) to the cross-sectional area of the inner hole of the air tube (41) is from 0.65 to 0.8, and a ratio of the opening area of the second dirt suction inlet (63) to the cross-sectional area of the inner hole of the air tube (41) is from 0.5 to 0.6.

6. The handheld vacuum cleaner (100) according to claim 1, wherein
the dirt collection unit (20) comprises a dirt cup (21) and a filter assembly (22), the suction generating unit (30) comprises a first motor and an air outlet portion (32), wherein, the dirt collection unit (20) and the suction generating unit (30) are located above the housing (10), and the dirt collection unit (20) is connected with an end of the suction generating unit (30) provided with the air outlet portion (32).

7. The handheld vacuum cleaner (100) according to claim 6, wherein
the filter assembly (22) comprises a first filter assembly (221) and a second filter assembly (222), the first filter assembly (221) is arranged inside the dirt cup (21), and the second filter assembly (222) is arranged at one end of the dirt cup (21) and is connected with the suction generating unit (30).

8. The handheld vacuum cleaner (100) according to claim 1, wherein
the housing (10) is provided with a locking assembly (113), the suction generating unit (30) is pivotally mounted on the housing (10), the dirt collection unit (20) comprises a dirt cup (21) and a cup cover (23) matched with the dirt cup (21), wherein, the suction generating unit (30) or the dirt collection unit (20) is provided with a first lock (211) matched with the locking assembly (113), when the locking assembly (113) is combined with the first lock (211), the cup cover (23) is closed, when the locking assembly (113) is separated from the first lock (211), the cup cover (23) is opened.

9. The handheld vacuum cleaner (100) according to claim 8, wherein
the housing (10) is provided with an accommodating groove (111) to house the suction generating unit (30) and the dirt collection unit (20), the locking assembly (113) is located inside the accommodating groove (111) and opposite to the dirt collection unit (20), and the first lock (211) is arranged on the dirt collection unit (20).

10. The handheld vacuum cleaner (100) according to claim 9, wherein
the locking assembly (113) comprises a second lock (1131) matched with the first lock (211), a second elastic component (1132) matched with the second lock (1131), and an unlocking button (1133) mounted on the second lock (1131), when the unlocking button (1133) is pressed, the second lock (1131) is displaced so that the first lock (211) and the second lock (1131) are out of matching, and then the second elastic component (1132) is elastically deformed.

11. The handheld vacuum cleaner (100) according to claim 10, wherein
the locking assembly (113) further comprises a third elastic component (1134); one end of the second elastic component (1132) abuts against the housing (10), the other end thereof abuts against the second lock (1131); one end of the third elastic component (1134) abuts against the second lock (1131), and the other end thereof abuts against the unlocking button (1133).

12. The handheld vacuum cleaner (100) according to claim 8, wherein
the housing (10) is provided with a first limiting portion (115), the suction generating unit (30) or the dirt collection unit (20) is provided with a second limiting portion (313) matched with the first limiting portion (115) to limit a rotation range of the suction generating unit (30), the second limiting portion (313) is arranged on the suction generating unit (30), the housing (10) is provided with an accommodating groove (111) to house the suction generating unit (30) and the dirt collection unit (20), and the first limiting portion (115) is located in the accommodating groove (111) and opposite to the suction generating unit (30).

13. The handheld vacuum cleaner (100) according to claim 8, wherein
the housing (10) is provided with an accommodating groove (111) to house the suction generating unit (30) and the dirt collection unit (20), a bounce structure (114) is arranged in the accommodating groove (111), the bounce structure (114) is opposite to the suction generating unit (30), and the bounce structure (114) comprises a thimble (1141) matched with the suction generating unit (30) and a first elastic component (1142) matched with the thimble (1141).

14. The handheld vacuum cleaner (100) according to claim 8, wherein
the housing (10) is provided with an accommodating groove (111) to house the suction generating unit (30) and the dirt collection unit (20), the dirt collection unit (20) further comprises a fourth elastic component (24), one end of the fourth elastic component (24) abuts against the dirt cup (21), and the other end thereof abuts against the cup cover (23); when the dirt collection unit (20) is housed in the accommodating groove (111), a side wall of the accommodating groove (111) abuts against the cup cover (23) to close the cup cover (23), then the fourth elastic component (24) is elastically deformed; when the dirt collection unit (20) is separated from the accommodating groove (111), the fourth elastic component (24) pushes the cup cover (23) to open; the side wall of the accommodating groove (111) is provided with a resisting structure (116) matched with the cup cover (23), and the resisting structure (116) comprises a resisting portion (1161) and a fifth elastic component (423) matched with the resisting portion (1161).

## Patentansprüche

1. Handstaubsauger (100), umfassend:
ein Gehäuse (10), das einen Körper (11), einen Halteabschnitt (12) und eine Basis (13) umfasst, wobei der Halteabschnitt (12) zwischen dem Körper (11) und der Basis (13) angeordnet ist, wobei der Körper (11) eine Aufnahmenut (111) und einen Lufteinlasskanal (112) umfasst,
eine Saugkraft-Erzeugungseinheit (30), die mindestens teilweise in der Aufnahmenut (111) untergebracht und so konfiguriert ist, dass sie einen Luftstrom entlang des Lufteinlasskanals (112) erzeugt,
eine Schmutzsammeleinheit (20), die mindestens teilweise in der Aufnahmenut (111) untergebracht, abnehmbar an der Saugkraft-Erzeugungseinheit (30) angebracht und so konfiguriert ist, dass sie Schmutz und Staub aus dem Luftstrom abscheidet, und
einen Akku (50), der an der Basis (13) angebracht und so konfiguriert ist, dass er der Saugkraft-Erzeugungseinheit (30) Leistung zuführt, **dadurch gekennzeichnet, dass**
der Halteabschnitt (12) mindestens teilweise mit einem statisch leitfähigen Abschnitt (125) bedeckt ist und der statisch leitfähige Abschnitt (125) elektrisch mit einem statischen Erzeugungsabschnitt des Handstaubsaugers (100) verbunden ist, und dadurch, dass der Halteabschnitt (12) einen Griff (123) und einen Stützbügel (124) beinhaltet, und ein Schnallenabschnitt gemeinschaftlich durch den Griff (123), den Stützbügel (124), den Körper (11) und die Basis (13) definiert ist, der statisch leitfähige Abschnitt (125) insgesamt S-förmig ist und einen ersten Abdeckabschnitt (1251), der einen Teil einer Oberfläche des Griffs (123) bedeckt, und einen zweiten Abdeckabschnitt (1252) beinhaltet, der eine dem Körper (11) nahe liegende Seite des Schnallenabschnitts bedeckt, wobei der erste Abdeckabschnitt (1251) und der zweite Abdeckabschnitt (1252) miteinander verbunden sind.

2. Handstaubsauger (100) nach Anspruch 1, wobei
der statisch leitfähige Abschnitt (125) ein leitfähiges nichtmetallisches Material mit einem Widerstand in einem Bereich zwischen 10⁷ Ω und 10¹² Ω ist.

3. Handstaubsauger (100) nach Anspruch 1 oder 2, wobei
sich ein der Basis (13) nahe liegendes Ende des ersten Abdeckabschnitts (1251) auf einer vom Stützbügel (124) entfernten Seite des Griffs (123) befindet, und sich ein dem Körper (11) nahe liegendes Ende des ersten Abdeckabschnitts (1251) auf einer dem Stützbügel (124) nahe liegenden Seite des Griffs (123) befindet.

4. Handstaubsauger (100) nach Anspruch 1, wobei
der Lufteinlasskanal (112) am Körper (11) angeordnet ist, und die Schmutzsammeleinheit (20) einen Schmutzbecher (21) und einen ersten Schmutzansaugeinlass (212) umfasst, der sich an einer Seitenwand des Schmutzbechers (21) befindet, wobei der erste Schmutzansaugeinlass (212) mit einem Luftauslass (1122) des Lufteinlasskanals (112) zusammenpasst, der Handstaubsauger (100) weiter eine Bürstenbaugruppe (60) und eine Luftrohreinheit (40) umfasst, die Bürstenbaugruppe (60) mit einem zweiten Schmutzansaugeinlass (63) versehen ist, die Luftrohreinheit (40) ein Luftrohr (41) umfasst, wobei der zweite Schmutzansaugeinlass (63) der Bürstenbaugruppe (60) durch das Luftrohr (41) mit einem Lufteinlass (1121) des Lufteinlasskanals (112) des Gehäuses (10) kommuniziert, eine Öffnungsfläche des ersten Schmutzansaugeinlasses (212) kleiner ist als eine Querschnittsfläche eines Innenlochs des Luftrohres (41), und eine Öffnungsfläche des zweiten Schmutzansaugeinlasses (63) kleiner ist als die Querschnittsfläche des Innenlochs des Luftrohres (41).

5. Handstaubsauger (100) nach Anspruch 4, wobei
ein Verhältnis der Öffnungsfläche des ersten Schmutzansaugeinlasses (212) zur Querschnittsfläche des Innenlochs des Luftrohres (41) 0,65 bis 0,8 beträgt, und ein Verhältnis der Öffnungsfläche des zweiten Schmutzansaugeinlasses (63) zur Querschnittsfläche des Innenlochs des Luftrohres (41) 0,5 bis 0,6 beträgt.

6. Handstaubsauger (100) nach Anspruch 1, wobei
die Schmutzsammeleinheit (20) einen Schmutzbecher (21) und eine Filterbaugruppe (22) umfasst, die Saugkraft-Erzeugungseinheit (30) einen ersten Motor und einen Luftauslassabschnitt (32) umfasst, wobei sich die Schmutzsammeleinheit (20) und die Saugkraft-Erzeugungseinheit (30) über dem Gehäuse (10) befinden und die Schmutzsammeleinheit (20) mit einem Ende der Saugkraft-Erzeugungseinheit (30) verbunden ist, das mit dem Luftauslassabschnitt (32) versehen ist.

7. Handstaubsauger (100) nach Anspruch 6, wobei
die Filterbaugruppe (22) eine erste Filterbaugruppe (221) und eine zweite Filterbaugruppe (222) umfasst, die erste Filterbaugruppe (221) innerhalb des Schmutzbechers (21) angeordnet ist und die zweite Filterbaugruppe (222) an einem Ende des Schmutzbechers (21) angeordnet und mit der Saugkraft-Erzeugungseinheit (30) verbunden ist.

8. Handstaubsauger (100) nach Anspruch 1, wobei
das Gehäuse (10) mit einer Verriegelungsbaugruppe (113) versehen ist, die Saugkraft-Erzeugungseinheit (30) schwenkbar am Gehäuse (10) angebracht ist, die Schmutzsammeleinheit (20) einen Schmutzbecher (21) und einen Becherdeckel (23) umfasst, der mit dem Schmutzbecher (21) zusammenpasst, wobei die Saugkraft-Erzeugungseinheit (30) oder die Schmutzsammeleinheit (20) mit einer ersten Verriegelung (211) versehen ist, die mit der Verriegelungsbaugruppe (113) zusammenpasst, wenn die Verriegelungsbaugruppe (113) mit der ersten Verriegelung (211) kombiniert wird, der Becherdeckel (23) geschlossen wird, wenn die Verriegelungsbaugruppe (113) von der ersten Verriegelung (211) getrennt wird, der Becherdeckel (23) geöffnet wird.

9. Handstaubsauger (100) nach Anspruch 8, wobei
das Gehäuse (10) mit einer Aufnahmenut (111) versehen ist, um die Saugkraft-Erzeugungseinheit (30) und die Schmutzsammeleinheit (20) unterzubringen, die Verriegelungsbaugruppe (113) sich innerhalb der Aufnahmenut (111) und der Schmutzsammeleinheit (20) gegenüberliegend befindet, und die erste Verriegelung (211) an der Schmutzsammeleinheit (20) angeordnet ist.

10. Handstaubsauger (100) nach Anspruch 9, wobei
die Verriegelungsbaugruppe (113) eine zweite Verriegelung (1131), die mit der ersten Verriegelung (211) zusammenpasst, eine zweite elastische Komponente (1132), die mit der zweiten Verriegelung (1131) zusammenpasst, und einen Entriegelungsknopf (1133) umfasst, der an der zweiten Verriegelung (1131) angebracht ist, wenn der Entriegelungsknopf (1133) gedrückt wird, die zweite Verriegelung (1131) so verlagert wird, dass die erste Verriegelung (211) und die zweite Verriegelung (1131) außer Passung sind, und dann die zweite elastische Komponente (1132) elastisch verformt wird.

11. Handstaubsauger (100) nach Anspruch 10, wobei
die Verriegelungsbaugruppe (113) weiter eine dritte elastische Komponente (1134) umfasst; ein Ende der zweiten elastischen Komponente (1132) am Gehäuse (10) anstößt, ihr anderes Ende an der zweiten Verriegelung (1131) anstößt; ein Ende der dritten elastischen Komponente (1134) an der zweiten Verriegelung (1131) anstößt, und ihr anderes Ende am Entriegelungsknopf (1133) anstößt.

12. Handstaubsauger (100) nach Anspruch 8, wobei
das Gehäuse (10) mit einem ersten Begrenzungsabschnitt (115) versehen ist, die Saugkraft-Erzeugungseinheit (30) oder die Schmutzsammeleinheit (20) mit einem zweiten Begrenzungsabschnitt (313) versehen ist, der mit dem ersten Begrenzungsabschnitt (115) zusammenpasst, um einen Drehbereich der Saugkraft-Erzeugungseinheit (30) zu begrenzen, der zweite Begrenzungsabschnitt (313) an der Saugkraft-Erzeugungseinheit (30) angeordnet ist, das Gehäuse (10) mit einer Aufnahmenut (111) versehen ist, um die Saugkraft-Erzeugungseinheit (30) und die Schmutzsammeleinheit (20) unterzubringen, und der erste Begrenzungsabschnitt (115) sich in der Aufnahmenut (111) und der Saugkraft-Erzeugungseinheit (30) gegenüberliegend befindet.

13. Handstaubsauger (100) nach Anspruch 8, wobei
das Gehäuse (10) mit einer Aufnahmenut (111) versehen ist, um die Saugkraft-Erzeugungseinheit (30) und die Schmutzsammeleinheit (20) unterzubringen, in der Aufnahmenut (111) eine Federstruktur (114) angeordnet ist, die Federstruktur (114) der Saugkraft-Erzeugungseinheit (30) gegenüberliegt, und die Federstruktur (114) eine Hülse (1141), die mit der Saugkraft-Erzeugungseinheit (30) zusammenpasst, und eine erste elastische Komponente (1142) umfasst, die mit der Hülse (1141) zusammenpasst.

14. Handstaubsauger (100) nach Anspruch 8, wobei
das Gehäuse (10) mit einer Aufnahmenut (111) versehen ist, um die Saugkraft-Erzeugungseinheit (30) und die Schmutzsammeleinheit (20) unterzubringen, die Schmutzsammeleinheit (20) weiter eine vierte elastische Komponente (24) umfasst, ein Ende der vierten elastischen Komponente (24) am Schmutzsammelbecher (21) anstößt und ihr anderes Ende am Becherdeckel (23) anstößt; wenn die Schmutzsammeleinheit (20) in der Aufnahmenut (111) untergebracht ist, eine Seitenwand der Aufnahmenut (111) an den Becherdeckel (23) anstößt, um den Becherdeckel (23) zu schließen, dann die vierte elastische Komponente (24) elastisch verformt wird; wenn die Schmutzsammeleinheit (20) von der Aufnahmenut (111) getrennt wird, die vierte elastische Komponente (24) den Becherdeckel (23) aufdrückt; die Seitenwand der Aufnahmenut (111) mit einer Widerstandsstruktur (116) versehen ist, die mit dem Becherdeckel (23) zusammenpasst, und die Widerstandsstruktur (116) einen Widerstandsabschnitt (1161) und eine fünfte elastische Komponente (423) umfasst, die mit dem Widerstandsabschnitt (1161) zusammenpasst.

## Revendications

1. Aspirateur portatif (100), comprenant :
un boîtier (10), comprenant un corps (11), une partie de maintien (12) et une base (13), la partie de maintien (12) étant agencée entre le corps (11) et la base (13), le corps (11) comprenant une rainure d'accueil (111) et un canal d'entrée d'air (112),
une unité de génération d'aspiration (30), logée au moins partiellement dans la rainure d'accueil (111) et configurée pour générer un écoulement d'air le long du canal d'entrée d'air (112),
une unité de collecte de saletés (20), logée au moins partiellement dans la rainure d'accueil (111), montée de manière amovible sur l'unité de génération d'aspiration (30) et configurée pour séparer les saletés et la poussière de l'écoulement d'air, et
un bloc-batterie (50), monté sur la base (13) et configuré pour l'alimentation électrique de l'unité de génération d'aspiration (30), **caractérisé en ce que**
la partie de maintien (12) est au moins partiellement recouverte d'une partie de conduction d'énergie statique (125), et la partie de conduction d'énergie statique (125) est électriquement reliée à une partie de génération d'énergie statique de l'aspirateur portatif (100) et **en ce que** la partie de maintien (12) inclut une poignée (123) et un support (124), et une partie de boucle est définie par la poignée (123), le support (124), le corps (11) et la base (13) collectivement, la partie de conduction d'énergie statique (125) est en forme de S dans son ensemble et inclut une première partie de recouvrement (1251) recouvrant une partie de la surface de la poignée (123) et une seconde partie de recouvrement (1252) recouvrant un côté de la partie de boucle proche du corps (11), la première partie de recouvrement (1251) et la seconde partie de recouvrement (1252) sont reliées entre elles.

2. Aspirateur portatif (100) selon la revendication 1, dans lequel
la partie de conduction d'énergie statique (125) est un matériau non métallique conducteur avec une résistivité comprise entre 10⁷Ω et 10¹²Ω.

3. Aspirateur portatif (100) selon la revendication 1 ou 2, dans lequel
une extrémité de la première partie de revêtement (1251) proche de la base (13) est située sur un côté de la poignée (123) éloigné du support (124), et une extrémité de la première partie de revêtement (1251) proche du corps (11) est située sur un côté de la poignée (123) proche du support (124).

4. Aspirateur portatif (100) selon la revendication 1, dans lequel
le canal d'entrée d'air (112) est agencé sur le corps (11), et l'unité de collecte de saletés (20) comprend un bac à saletés (21) et une première entrée d'aspiration de saletés (212) située sur une paroi latérale du bac à saletés (21), la première entrée d'aspiration de saletés (212) correspond à une sortie d'air (1122) du canal d'entrée d'air (112), l'aspirateur portatif (100) comprend en outre un ensemble brosse (60) et un unité de tube d'air (40), l'ensemble brosse (60) est doté d'une seconde entrée d'aspiration de saletés (63), l'unité de tube d'air (40) comprend un tube d'air (41), dans lequel la seconde entrée d'aspiration de saletés (63) de l'ensemble brosse (60) communique avec une entrée d'air (1121) du canal d'entrée d'air (112) du boîtier (10) par l'intermédiaire du tube d'air (41), une surface d'ouverture de la première entrée d'aspiration de saletés (212) est inférieure à une surface de section transversale d'un orifice intérieur du tube d'air (41), et une surface d'ouverture de la seconde entrée d'aspiration de saletés (63) est plus petite que la surface de section transversale du trou intérieur du tube d'air (41).

5. Aspirateur portatif (100) selon la revendication 4, dans lequel
un rapport entre la surface d'ouverture de la première entrée d'aspiration de saletés (212) et la surface de section transversale du trou intérieur du tube d'air (41) est de 0,65 à 0,8, et un rapport entre la surface d'ouverture de la seconde entrée d'aspiration de saletés (63) et la surface de section transversale du trou intérieur du tube d'air (41) est de 0,5 à 0,6.

6. Aspirateur portatif (100) selon la revendication 1, dans lequel
l'unité de collecte de saletés (20) comprend un bac à saletés (21) et un ensemble filtre (22), l'unité de génération d'aspiration (30) comprend un premier moteur et une partie de sortie d'air (32), dans lequel l'unité de collecte de saletés (20) et l'unité de génération d'aspiration (30) sont situées au-dessus du boîtier (10), et l'unité de collecte de saletés (20) est reliée à une extrémité de l'unité de génération d'aspiration (30) dotée de la partie de sortie d'air (32).

7. Aspirateur portatif (100) selon la revendication 6, dans lequel
l'ensemble filtre (22) comprend un premier ensemble filtre (221) et un second ensemble filtre (222), le premier ensemble filtre (221) est agencé à l'intérieur du bac à saletés (21), et le second ensemble filtre (222) est agencé à une extrémité du bac à saletés (21) et est relié à l'unité de génération d'aspiration (30).

8. Aspirateur portatif (100) selon la revendication 1, dans lequel
le boîtier (10) est doté d'un ensemble de verrouillage (113), l'unité de génération d'aspiration (30) est montée de manière pivotante sur le boîtier (10), l'unité de collecte de saletés (20) comprend un bac à saletés (21) et un couvercle de bac (23) adapté au bac à saletés (21), dans lequel l'unité de génération d'aspiration (30) ou l'unité de collecte de saletés (20) est dotée d'un premier verrou (211) adapté à l'ensemble de verrouillage (113), lorsque l'ensemble de verrouillage (113) est combiné avec le premier verrou (211), le couvercle de bac (23) est fermé, lorsque l'ensemble de verrouillage (113) est séparé du premier verrou (211), le couvercle de bac (23) est ouvert.

9. Aspirateur portatif (100) selon la revendication 8, dans lequel
le boîtier (10) est doté d'une rainure d'accueil (111) destinée à loger l'unité de génération d'aspiration (30) et l'unité de collecte de saletés (20), l'ensemble de verrouillage (113) est situé à l'intérieur de la rainure d'accueil (111) et en face de l'unité de collecte de saletés (20), et le premier verrou (211) est agencé sur l'unité de collecte de saletés (20).

10. Aspirateur portatif (100) selon la revendication 9, dans lequel
l'ensemble de verrouillage (113) comprend un second verrou (1131) adapté au premier verrou (211), un deuxième composant élastique (1132) adapté au second verrou (1131) et un bouton de déverrouillage (1133) monté sur le second verrou (1131), lorsque le bouton de déverrouillage (1133) est enfoncé, le second verrou (1131) est déplacé de sorte que le premier verrou (211) et le second verrou (1131) ne soient plus adaptés, puis le deuxième composant élastique (1132) est déformé élastiquement.

11. Aspirateur portatif (100) selon la revendication 10, dans lequel
l'ensemble de verrouillage (113) comprend en outre un troisième composant élastique (1134) ; une extrémité du deuxième composant élastique (1132) vient en butée contre le boîtier (10), l'autre extrémité de celui-ci vient en butée contre le second verrou (1131) ; une extrémité du troisième composant élastique (1134) vient en butée contre le second verrou (1131), et l'autre extrémité de celui-ci vient en butée contre le bouton de déverrouillage (1133).

12. Aspirateur portatif (100) selon la revendication 8, dans lequel
le boîtier (10) est doté d'une première partie de limitation (115), l'unité de génération d'aspiration (30) ou l'unité de collecte de saletés (20) est dotée d'une seconde partie de limitation (313) adaptée à la première partie de limitation (115) pour limiter une plage de rotation de l'unité de génération d'aspiration (30), la seconde partie de limitation (313) est agencée sur l'unité de génération d'aspiration (30), le boîtier (10) est doté d'une rainure d'accueil (111) pour loger l'unité de génération d'aspiration (30) et l'unité de collecte de saletés (20), et la première partie de limitation (115) est située dans la rainure d'accueil (111) et face à l'unité de génération d'aspiration (30).

13. Aspirateur portatif (100) selon la revendication 8, dans lequel
le boîtier (10) est doté d'une rainure d'accueil (111) destinée à loger l'unité de génération d'aspiration (30) et l'unité de collecte de saletés (20), une structure de rebond (114) est agencée dans la rainure d'accueil (111), la structure de rebond (114) est face à l'unité de génération d'aspiration (30), et la structure de rebond (114) comprend une cosse (1141) adaptée à l'unité de génération d'aspiration (30) et un premier composant élastique (1142) adapté à la cosse (1141).

14. Aspirateur portatif (100) selon la revendication 8, dans lequel
le boîtier (10) est doté d'une rainure d'accueil (111) destinée à loger l'unité de génération d'aspiration (30) et l'unité de collecte de saletés (20), l'unité de collecte de saletés (20) comprend en outre un quatrième composant élastique (24), une extrémité du quatrième composant élastique (24) vient en butée contre le bac à saletés (21) et l'autre extrémité de celui-ci vient en butée contre le couvercle de bac (23) ; lorsque l'unité de collecte de saletés (20) est logée dans la rainure d'accueil (111), une paroi latérale de la rainure d'accueil (111) vient en butée contre le couvercle de bac (23) pour fermer le couvercle de bac (23), puis le quatrième composant élastique (24) est déformé élastiquement ; lorsque l'unité de collecte de saletés (20) est séparée de la rainure d'accueil (111), le quatrième composant élastique (24) pousse le couvercle de bac (23) pour l'ouvrir ; la paroi latérale de la rainure d'accueil (111) est dotée d'une structure de résistance (116) adaptée au couvercle de bac (23), et la structure de résistance (116) comprend une partie de résistance (1161) et un cinquième composant élastique (423) adapté à la partie de résistance (1161).
